# EUROPEAN PATENT APPLICATION

(11) **EP 4 239 780 A1**
(43) Date of publication of application: **06.09.2023**
(21) Application number: 21964985.2
(22) Date of filing: 30.12.2021
(51) Int. Cl.: H01M 50/449

(54) **SEPARATOR AND PREPARATION METHOD THEREFOR, SECONDARY BATTERY COMPRISING SEPARATOR, AND ELECTRIC DEVICE**

(71) Applicant: Contemporary Amperex Technology Co., Limited, Ningde City, Fujian 352100 (CN)
(72) Inventor: HONG, Haiyi, Fujian 352100 (CN); YANG, Jianrui, Fujian 352100 (CN)
(74) Representative: Jacob, Reuben Ellis
(86) International application number: PCT/CN2021/143069
(87) International publication number: WO 2023/123205

(57) **Abstract**

This application provides a separator, a preparation method of the separator, a secondary battery containing the separator, and an electrical device. The separator includes: a porous separator substrate; and a pressure-sensitive coating applied onto at least one surface of the separator substrate. The pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%. The pressure-sensitive binder polymer includes a binder polymer and a plasticizer. The separator according to this application is of high ion-conductivity and high bonding performance at a normal temperature. The separator does not exert a bonding action under a pressure less than or equal to 1 MPa, but exerts a substantial bonding action under a pressure greater than or equal to 2 MPa, thereby significantly improving structural stability and ionic conductance of the electrochemical device.

## Description

### TECHNICAL FIELD

This application relates to the technical field of batteries, and in particular, to a separator, a preparation method of same, a secondary battery containing same, and an electrical device.

### BACKGROUND

In a process of manufacturing a battery cell of an electrochemical device, the dislocation of an electrode plate and a separator occurs inevitably during transit. Consequently, the electrode plates contact each other to cause scrap of a dry cell, and even the electrode plates are wrinkled severely to impair the kinetic performance and safety performance of the battery cell. A currently available solution is to apply an adhesive coating onto the separator, and typically pre-compress the electrode plate and the separator under an appropriate pressure in a first lamination step of the electrode plate and the separator of the electrochemical device, so as to ensure that the electrode plate is bonded to the separator of the electrochemical device to some extent before a next step. However, because the production efficiency needs to be high, the pressure and the bonding action time in this case are not enough to implement proper bonding between the electrode plate and the separator of the electrochemical device.

To solve the above problem, when the adhesive coating on the separator is made of an adhesive material of a very low DSC melting point, the following tricky problems need to be considered: the separator is soft, and, in order to facilitate efficient use and transit of the electrochemical device, the separator is usually wound around a circular reel into a roll under an appropriate force. In this case, different layers of the separator are in close contact and exert a pressure on each other. If the DSC melting point of the material on the separator is relatively low, different layers of the separator are prone to bond together, thereby adversely affecting subsequent high-speed lamination of the electrode plate and the separator.

### SUMMARY

This application is made in view of the foregoing problem. An objective of this application is to provide a pressure-sensitive separator, a preparation method of the separator, and a secondary battery containing the pressure-sensitive separator. Further, another objective of this application is to provide an electrical device containing the secondary battery.

To achieve the foregoing objectives, a first aspect of this application provides a separator. The separator is a pressure-sensitive separator and may include: a porous separator substrate; and a pressure-sensitive coating applied onto at least one surface of the separator substrate. The pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%. The pressure-sensitive binder polymer may include a binder polymer and a plasticizer. The separator possesses good pressure-sensitive properties, and exhibits a bonding force of less than 0.23 N/m, and particularly, less than 0.1 N/m, under a pressure less than or equal to 1 MPa. Therefore, different layers of the separator are prevented from sticking to each other during rewinding and storage of the separator, and the separator bonds to an electrode plate substantially under a pressure greater than or equal to 2 MPa. Therefore, in preparing a battery cell from the separator, the electrode plate and the separator can be closely fitted together under normal temperature conditions and an appropriate pressure.

In some embodiments, a mass ratio between the binder polymer and the plasticizer included in the pressure-sensitive binder polymer may be (4 to 19): 1, and optionally (4 to 11): 1. The mass percent of the plasticizer included in the pressure-sensitive binder polymer falls within the foregoing range, so as to ensure that a relatively great bonding force is generated between the electrode plate and the separator under a given pressure, without resulting in an increase of the resistance of the separator or a decline in the cycle performance of the secondary battery.

In some embodiments, the pressure-sensitive binder polymer may be of a core-shell structure, a core and a shell of the core-shell structure each may include the binder polymer and the plasticizer, a mass ratio between the binder polymer and the plasticizer in the core may be (2 to 5): 1, and optionally (3 to 4): 1, and a mass ratio between the binder polymer and the plasticizer in the shell may be (6 to 10): 1, and optionally (7 to 9): 1. Both the core and shell of the core-shell structure are substantially made of the binder polymer and the plasticizer, thereby further improving the pressure-sensitive properties of the pressure-sensitive binder polymer, and further improving the kinetic performance of the separator.

In some embodiments, a part of the plasticizer is grafted onto the binder polymer. Optionally, based on a weight of the plasticizer, at least 5 wt% of the plasticizer is grafted onto the binder polymer. When a part of the plasticizer is grafted onto the binder polymer, the plasticizer is prevented from largely migrating into an electrolytic solution during cycles. The migrated plasticizer may consume various functional additives in the electrolytic solution, increase the resistance value of the separator, and affect the kinetic performance of the battery cell.

In some embodiments, an average particle diameter of the pressure-sensitive binder polymer may be 0.5 to 3.0 µm, and optionally 0.8 to 2.0 µm. The pressure-sensitive binder polymer of an appropriate particle diameter facilitates uniform distribution of the binder polymer in the first organic particles and the second organic particles, improves exertion of the performance of bonding the core and shell of the binder polymer to the electrode plate under a given pressure, and improves the resistance of the separator effectively.

In some embodiments, a DSC melting point of the pressure-sensitive binder polymer may be -50 °C to 100 °C, and optionally -45 °C to 60 °C. When the DSC melting point of the pressure-sensitive binder polymer falls within the above range, it is ensured that an appropriate bonding force is exerted at a normal temperature, and it is avoided that an excessive bonding force is generated under a pressure of 1 MPa and results in bonding of the separator during rewinding. At the same time, it is avoided that a deficient bonding force is generated at a normal temperature of 2 MPa, results in weak bonding between the separator and the electrode plate, and adversely affects the shaping of the battery cell.

In some embodiments, the binder polymer may include a copolymer formed by copolymerizing a reactive monomer mixture, and the reactive monomer mixture includes at least one of the following first monomers, at least one of the following second monomers, at least one of the following third monomers, and at least one of the following reactive dispersants:
first monomers, which, with a melting point typically higher than 80°C, may include: acrylic acid, methacrylic acid, methyl methacrylate, tert-butyl methacrylate, isobornyl methacrylate, methylol acrylamide, acrylamide, styrene, and acrylonitrile;
second monomers, which, with a melting point typically not higher than 80 °C , may include: C₄ to C₂₂ alkyl acrylate, isobutyl acrylate, isooctyl acrylate, tert-butyl acrylate, 2-ethylhexyl (isooctyl) acrylate, cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene ureaethyl methacrylate, dicyclopentene ethoxy methacrylate, tetrahydrofuran methacrylate, trifluoroethyl methacrylate, dimethylaminoethyl methacrylate, diethylaminoethyl methacrylate, ethylene ureaethyl methacrylate, propylene methacrylate, dicyclopentene ethoxy methacrylate, tetrahydrofuran methacrylate, and trifluoroethyl methacrylate;
third monomers, which are cross-linking monomers and each contain at least one of hydroxyl, amino, or a double bond and may include: 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloyloxypropyltrimethoxysilane, N-methylol acrylamide, N-butoxymethyl(meth)acrylamide, diacetone acrylamide (DAAM), ethyl acetoacetate methacrylate (AAEM), vinylstyrene, epoxy resin (with an epoxy value of 0.35 to 0.50), and divinylbenzene; and
reactive dispersants, which may include: polyvinyl alcohol, polypropylene alcohol, polypropylene glycol, polyethylene glycol, and polyethylene acid alcohol. Optionally, the alcoholysis degree of the reactive dispersants is greater than or equal to 85%, and an average polymerization degree of the reactive dispersants is 400 to 2000; and optionally, the alcoholysis degree is greater than or equal to 88%, and the average polymerization degree is 500 to 1600.

When the binder polymer includes a copolymer formed by copolymerizing a reactive monomer mixture, and the reactive monomer mixture includes at least one of the foregoing first monomers, at least one of the foregoing second monomers, at least one of the foregoing third monomers, and at least one of the foregoing reactive dispersants, proper swelling and bonding of the binder polymer are ensured. In this way, the pressure-sensitive binder polymer is ensured to achieve a proper swelling rate, sufficient pressure sensitivity, high bonding performance, and also an appropriate elastic modulus, so as to ensure a good shaping effect and high kinetic performance and safety performance of the battery cell.

In some embodiments, the plasticizer may be one or more selected from: C₄ to C₁₀ glycerol alkyl diether or monoether; C₄ to C₁₀ glycerol carboxylic acid monoester or diester; C₄ to C₁₀ propylene glycol alkyl monoether; and glycerol.

In some embodiments, an average thickness of the pressure-sensitive coating may be 2 to 20 µm, and optionally 2 to 15 µm.

In some embodiments, an average particle diameter of the first organic particle may be 5 to 30 µm, and optionally 5 to 20 µm. In this way, the first organic particle possesses a relatively large average particle diameter. On the one hand, the effective contact area between the electrode plate and the separator is increased, thereby greatly improving the bonding effect between the electrode plate and the separator. On the other hand, the organic particles are prevented from permeating into the pores formed on the separator substrate. In addition, large pores give rise to relatively large voids, thereby solving the problem of poor air permeability of the separator, reducing the probability of blocking the pores of the separator by small particles, and avoiding the risk of increasing the internal resistance. In addition, because the first organic particle has a relatively large average particle diameter and is compressible to some extent, the first organic particle existent at the corner of the battery cell can effectively provide a space for releasing the stress at the corner.

In some embodiments, a DSC melting point of the first organic particle may be -50 °C to 200 °C, and optionally -40 °C to 160 °C. When the DSC melting point of the first organic particle falls within the above range, the first organic particle can withstand the swelling of the electrolytic solution. On the one hand, excessive consumption of the electrolytic solution is avoided, and the residual monomers are not prone to be dissociated by the electrolytic solution. The dissociated monomers may block the separator, and impair the kinetic performance of the battery cell. On the other hand, the drastic decrease of the bonding force between the separator and the electrode plate is avoided, and the electrode plate is not prone to be crushed by the first organic particles to result in a decline in the safety performance.

In some embodiments, a weight-average molecular weight of the first organic particle may be 300×10³ g/mol to 800×10³ g/mol, and optionally 400×10³ g/mol to 650×10³ g/mol. That the weight-average molecular weight of the first organic particle falls within the above range ensures a proper swelling degree of the first organic particle and a proper bonding force between the first organic particle and the electrode plate. In some embodiments, the first organic particle may be one or more polymers, and each of the polymers includes one or more groups selected from halogen, phenyl, epoxy, cyano, ester, and amido.

In some embodiments, the first organic particle may be at least one selected from: a homopolymer or copolymer of fluorine-containing alkenyl monomer units; a homopolymer or copolymer of olefin monomer units; a homopolymer or copolymer of unsaturated nitrile monomer units; a homopolymer or copolymer of alkylene oxide monomer units; a dimer, homopolymer, or copolymer of monosaccharide monomer units; and a modified compound of any one of the foregoing homopolymers or copolymers.

In some embodiments, the fluorine-containing alkenyl monomer units may be one or more selected from difluoroethylene, vinylidene fluoride, trifluoroethylene, chlorotrifluoroethylene, tetrafluoroethylene, hexafluoropropylene, or a derivative thereof.

In some embodiments, the olefin monomer units may be one or more selected from ethylene, propylene, butadiene, isoprene, styrene, or a derivative thereof.

In some embodiments, the unsaturated nitrile monomer units may be one or more selected from acrylonitrile, methacrylonitrile, or a derivative thereof.

In some embodiments, the alkylene oxide monomer units may be one or more selected from ethylene oxide, propylene oxide, or a derivative thereof.

In some embodiments, the monosaccharide monomer units may be selected from glucose or a derivative thereof.

In some embodiments, the first organic particle may be at least one selected from: polyperfluoroethylene, polyvinylidene difluoride, poly(vinylidene difluoride-co-hexafluoropropylene), poly(vinylidene difluoride-co-trichloroethylene), poly(styrene-co-methyl methacrylate), poly(styrene-co-butyl acrylate), polymethyl methacrylate, polyacrylonitrile, polyvinyl acetate, poly(ethylene-co-vinyl acetate), polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose.

In some embodiments, the first organic particle may be at least one selected from: poly(vinylidene difluoride-co-hexafluoropropylene), poly(styrene-co-butyl acrylate), polyperfluoroethylene, polyvinylidene difluoride, and poly(vinylidene difluoride-co-trichloroethylene).

When the first organic particle is selected from the above substances, the first organic particle exhibits an appropriate swelling degree and is of appropriate adhesivity to the electrode plate. A proper bonding force is achieved between the first organic particle and the pressure-sensitive binder polymer. At the same time, the pressure-sensitive binder polymer on the first organic particle is caused to be uniformly dispersed, thereby ensuring high bonding performance and kinetic performance.

In some embodiments, a mass ratio between the first organic particle and the second organic particle may be (1 to 4): 1, and optionally (1.5 to 2.5): 1. When the mass ratio between the first organic particle and the second organic particle falls within the above range, the infiltration effect and the distribution uniformity of the electrolytic solution are improved effectively, and in turn, the high-temperature storage performance of the battery is improved. With a relatively large average particle diameter, the first organic particle is usually designed as a secondary particles. With a relatively small average particle diameter, the second organic particle is usually designed as a primary particle. At the same time of enhancing the bonding force between the separator and the electrode plate, the first organic particle and the second organic particle work together to ensure that the separator includes non-uniform pores of a moderate porosity.

In some embodiments, an average particle diameter of the second organic particle may be 0.5 to 10 µm, and optionally 2 to 8 µm.

In some embodiments, a DSC melting point of the second organic particle may be -30 °C to 100 °C, and optionally -30 °C to 70 °C. When the DSC melting point of the second organic particle falls within the above range, the second organic particle can withstand the swelling of the electrolytic solution. On the one hand, excessive consumption of the electrolytic solution is avoided, and the residual monomers are not prone to be dissociated by the electrolytic solution. The dissociated monomers may block the separator, and impair the kinetic performance of the battery cell. On the other hand, the drastic decrease of the bonding force between the separator and the electrode plate is avoided, and the electrode plate is not prone to be crushed by the second organic particles to result in a decline in the safety performance.

In some embodiments, a weight-average molecular weight of the second organic particle may be 10×10³ g/mol to 100×10³ g/mol, and optionally 20×10³ g/mol to 80×10³ g/mol. That the weight-average molecular weight of the second organic particle falls within the above range ensures a proper swelling degree of the second organic particle and a proper bonding force between the second organic particle and the electrode plate.

In some embodiments, the second organic particle is one or more polymers, and each of the polymers includes one or more groups selected from phenyl, epoxy, cyano, ester, hydroxyl, carboxyl, sulfonyl ester, and pyrrolidone.

In some embodiments, the second organic particle may be at least one selected from: a homopolymer or copolymer of acrylate monomer units; a homopolymer or copolymer of acrylic acid monomer units; a homopolymer or copolymer of unsaturated nitrile monomer units; a homopolymer or copolymer of alkenyl monomer units; a homopolymer or copolymer of styrene monomer units; a homopolymer or copolymer of epoxy monomer units; a polyurethane compound; a rubber compound; a dimer, homopolymer, or copolymer of monosaccharide monomer units; and a modified compound of any one of the foregoing homopolymers or copolymers.

In some embodiments, the acrylate monomer units may be one or more selected from methyl acrylate, ethyl acrylate, propyl acrylate, butyl acrylate, methyl methacrylate, butyl methacrylate, isooctyl methacrylate, or a derivative thereof.

In some embodiments, the acrylic acid monomer units may be one or more selected from acrylic acid, methacrylic acid, or a derivative thereof.

In some embodiments, the unsaturated nitrile monomer units may be one or more selected from acrylonitrile, methacrylonitrile, or a derivative thereof.

In some embodiments, the alkenyl monomer units may be one or more selected from ethylene, vinyl acetate, butadiene, or a derivative thereof.

In some embodiments, the styrene monomer units may be one or more selected from styrene, methylstyrene, or a derivative thereof.

In some embodiments, the epoxy monomer units may be one or more selected from ethylene oxide, propylene oxide, or a derivative thereof.

In some embodiments, the monosaccharide monomer units may be selected from glucose or a derivative thereof.

In some embodiments, the second organic particle is at least one selected from: polymethyl methacrylate, polyacrylonitrile, polyvinylpyrrolidone, polyvinyl acetate, poly(ethylene-co-vinyl acetate), poly(styrene-co-methyl methacrylate), poly(styrene-co-butyl acrylate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, poly(acrylonitrile-co-styrene-co-butadiene), poly(styrene-co-butyl acrylate-co-isooctyl acrylate), and polyimide.

When the second organic particle is selected from the above substances, the second organic particle exhibits an appropriate swelling degree and is of appropriate adhesivity to the electrode plate. A proper bonding force is achieved between the first organic particle and the pressure-sensitive binder polymer. At the same time, the pressure-sensitive binder polymer on the first organic particle is caused to be uniformly dispersed, thereby ensuring high bonding performance and kinetic performance.

In some embodiments, a porosity of the separator substrate may be 10% to 95%, a pore diameter of the separator substrate may be 20 to 60 nm, and a thickness of the separator substrate may be 3 to 12 µm, and optionally 5 to 9 µm. When the porosity of the separator substrate falls within the above range, a good trade-off between the kinetics and safety performance of the secondary battery is achieved. When the thickness of the separator substrate falls within the above range, a good trade-off between the energy density and safety performance of the secondary battery is achieved.

In some embodiments, the separator substrate includes one or more films or nonwovens selected from: polyethylene, polypropylene, polyethylene terephthalate, polybutylene terephthalate, polyester, polyacetal, polyamide, polycarbonate, polyimide, polyether ether ketone, polyaryl ether ketone, polyetherimide, polyamideimide, polybenzimidazole, polyethersulfone, polyphenylene ether, a cycloolefin copolymer, polyphenylene sulfide, and polyethylene naphthalene.

A second aspect of this application provides a method for preparing the separator disclosed in the first aspect. The method includes the following steps:
S1) adding a first organic particle and a dispersant into a solvent to form a first polymer solution;
S2) adding a pressure-sensitive binder polymer into the first polymer solution obtained in step S1), and mixing to form a second polymer solution;
S3) optionally, adding a second organic particle into the second polymer solution obtained in step S2), and mixing to form a third polymer solution; and
S4) coating at least one surface of a porous separator substrate with the second polymer solution obtained in step S2) or the third polymer solution obtained in step S3), and drying to obtain a separator.

The separator includes a pressure-sensitive coating formed on at least one surface of the separator substrate; the pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%; and the pressure-sensitive binder polymer includes a binder polymer and a plasticizer.

A third aspect of this application provides a secondary battery. The secondary battery includes a positive electrode plate, a negative electrode plate, a separator located between the positive electrode plate and the negative electrode plate, and an electrolytic solution. The separator is the separator disclosed in the first aspect of this application, or a separator prepared by the method disclosed in the second aspect of this application.

A fourth aspect of this application provides an electrical device. The electrical device includes the secondary battery disclosed in the third aspect of this application.

This application brings at least the following beneficial effects:
The pressure-sensitive separator according to this application includes a porous separator substrate and a pressure-sensitive coating applied onto at least one surface of the separator substrate. The pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%. The pressure-sensitive binder polymer may include a binder polymer and a plasticizer, thereby making the separator achieve high ion-conductivity and bonding performance at a normal temperature. The resistance of the separator at a normal temperature is 1.32 Ω or less, and particularly, 1.1 Ω or less. The separator does not bond to the electrode plate under a pressure less than or equal to 1 MPa, but bonds to the electrode plate substantially under a pressure greater than or equal to 2 MPa. Therefore, on the one hand, the coating enables a tight fit between the electrode plate and the separator of the electrochemical device at a normal temperature, thereby avoiding dislocation of the electrode plate and the separator of the electrochemical device during production and transit, thereby ensuring structural stability of the electrochemical device, and ensuring a proper filling rate of a battery cell prepared from the separator and the yield rate of packaged battery cells, and in turn, improving the shaping performance, safety performance, and kinetic performance of the battery cells. In addition, the tunnel furnace and a second lamination step in a conventional battery cell production process are omissible, thereby saving production space and production time, reducing energy consumption, and in turn, increasing productivity. On the other hand, the separator disclosed in this application will not stick together during rewinding and storage, thereby facilitating use in the subsequent manufacture of the battery cell.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic diagram of a secondary battery according to an embodiment of this application;
FIG. 2 is a schematic diagram of a battery module according to an embodiment of this application;
FIG. 3 is a schematic diagram of a battery pack according to an embodiment of this application;
FIG. 4 is an exploded view of FIG. 3;
FIG. 5 is a schematic diagram of an electrical device according to an embodiment of this application; and
FIG. 6 is an image of morphology of a pressure-sensitive coating of a separator prepared in Embodiment 13 of this application.

### Reference numerals:

1. Battery pack;
2. Upper box;
3. Lower box;
4. Battery module;
5. Secondary battery.

### DETAILED DESCRIPTION OF EMBODIMENTS

The following describes and discloses in detail a separator, a preparation method of same, a secondary battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

It is hereby noted that in the description herein, unless otherwise specified, a range defined by a numerical value qualified by "at least" or "at most" includes this numerical value, and the word "more" in the phrase "one or more of" means at least two.

### [Secondary battery]

Secondary batteries have become desirable power supplies of electrical devices by virtue of a high energy density, portability, no memory effect, environmental friendliness, and other merits. A separator in the secondary battery is an important part to ensure safety performance of the battery. However, on the one hand, in a process of manufacturing a battery cell of an electrochemical device, the dislocation of an electrode plate and a separator occurs inevitably during production and transit. Consequently, the electrode plates contact each other to cause scrap of a dry cell, and even the electrode plates are wrinkled severely to impair the kinetic performance and safety performance of the battery cell. A currently available solution is to apply an adhesive coating onto the separator, and typically pre-compress the electrode plate and the separator under an appropriate pressure in a first lamination step of the electrode plate and the separator of the electrochemical device, so as to ensure that the electrode plate is bonded to the separator of the electrochemical device to some extent before a next step. However, because the production efficiency needs to be high and an excessive pressure that may deteriorate the base material structure needs to be avoided, the pressure and the action time in this case are not enough to implement proper bonding between the electrode plate and the separator of the electrochemical device. In addition, in order to ensure a proper filling rate of the battery cell and a high yield rate of packaged battery cells, the electrode plate and the separator of the electrochemical device usually need to be baked in a tunnel furnace at 80 °C to 100 °C for 700 seconds and then be subjected to a pressure to achieve a close fit between the electrode plate and the separator of the electrochemical device. Such a process requires a large amount of production space and production time, making it difficult to increase the productivity. On the other hand, in order to solve the above problem, the adhesive coating on the separator is made of an adhesive material of a very low softening point, and the following tricky problems need to be considered: the separator is soft, and, in order to facilitate efficient use and transit of the electrochemical device, the separator is usually wound around a circular reel into a roll under an appropriate force. In this case, different layers of the separator are in close contact and exert a pressure on each other. If the softening point of the adhesive material on the separator is relatively low, different layers of the separator are prone to bond together, thereby adversely affecting subsequent high-speed lamination of the electrode plate and the separator.

This application provides a secondary battery. The secondary battery achieves good safety performance and kinetic performance.

Generally, the secondary battery includes a positive electrode plate, a negative electrode plate, an electrolyte, and a separator. During charging of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive film layer disposed on at least one surface of the positive current collector and containing a positive active material. As an example, the positive current collector includes two surfaces opposite to each other in a thickness direction of the positive current collector. The positive film layer is disposed on either or both of the two opposite surfaces of the positive current collector.

The positive current collector may be made of a material of high electrical conductivity and high mechanical strength. In some embodiments, the positive current collector may be an aluminum foil.

The specific type of the positive active material is not particularly limited in this application, and may be a material known in the art for use in a positive electrode of a secondary battery, and may be selected by a person skilled in the art according to practical needs.

In some embodiments, the secondary battery according to this application may be a lithium-ion secondary battery. The positive active material may include a positive active material well known in the art for use in a battery. For example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. The type of the binder is not particularly limited, and may be selected by a person skilled in the art according to practical needs. As an example, the binder for use in the positive film layer may include one or more of polyvinylidene difluoride (PVDF) or polytetrafluoroethylene (PTFE).

In some embodiments, the positive film layer further optionally includes a conductive agent. The type of the conductive agent is not particularly limited, and may be selected by a person skilled in the art according to practical needs. As an example, the conductive agent for use in the positive film layer may include one or more of graphite, superconductive carbon, acetylene black, carbon black, Ketjen black, carbon dots, carbon nanotubes, graphene, or carbon nanofibers.

In some embodiments, the steps of preparing a positive electrode plate from a positive active material may include: dispersing a positive active material, a binder, and optionally a conductive agent into a solvent, where the solvent may be N-methyl-pyrrolidone, and stirring the mixture well in a vacuum mixer to obtain a positive slurry; coating a positive current collector aluminum foil with the positive slurry evenly, air-drying the slurry at a room temperature, and then moving the current collector into an oven for drying, and performing cold calendering and slitting to obtain a positive electrode plate.

### [Negative electrode plate]

The negative electrode plate includes a negative current collector and a negative film disposed on at least one surface of the negative current collector. As an example, the negative current collector includes two surfaces opposite to each other in a thickness direction of the negative current collector. The negative film layer is disposed on either or both of the two opposite surfaces of the negative current collector.

The negative current collector may be made of a material of high electrical conductivity and high mechanical strength, and serve functions of conducting electrons and collecting current. In some embodiments, the negative current collector may be a copper foil.

The negative film layer includes a negative active material. The steps of preparing a negative electrode plate from the negative active material may include: dispersing a negative active material, a binder, and optionally a thickener and a conductive agent into a solvent such as deionized water to form a homogeneous negative slurry, coating a negative current collector with the negative slurry, and performing steps such as drying and cold calendering to obtain a negative electrode plate.

In some embodiments, the type of the negative active material is not particularly limited in this application, and the negative electrode plate optionally includes a negative active material suitable for use in a negative electrode of a secondary battery. The negative active material may be one or more of a graphite material (such as artificial graphite and natural graphite), mesocarbon microbeads (MCMB for short), hard carbon, soft carbon, a silicon-based material, or a tin-based material.

In some embodiments, the binder may be one or more selected from polyacrylic acid (PAA), polyacrylic acid sodium (PAAS), polyacrylamide (PAM), polyvinyl alcohol (PVA), styrene-butadiene rubber (SBR), sodium alginate (SA), polymethyl acrylic acid (PMAA), and carboxymethyl chitosan (CMCS).

In some embodiments, the thickener may be sodium carboxymethyl cellulose (CMC-Na).

In some embodiments, the conductive agent for use in the negative electrode plate may be one or more selected from graphite, superconductive carbon, acetylene black, carbon black, Ketjen black, carbon dots, carbon nanotubes, graphene, and carbon nanofibers.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluoro(oxalato) borate), LiBOB (lithium bis(oxalato) borate), LiPO2F₂ (lithium difluorophosphate), LiDFOP (lithium difluoro(bisoxalato) phosphate), and LiTFOP (lithium tetrafluoro(oxalato) phosphate).

In some embodiments, the solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like.

### [Separator]

Secondary batteries that employ an electrolytic solution and some secondary batteries that employ a semi-solid electrolyte further contain a separator. The separator is disposed between the positive electrode plate and the negative electrode plate to serve an isolation purpose.

In the secondary battery disclosed in this application, the separator may be the pressure-sensitive separator disclosed in this application. This separator is of good ion-conductivity and bonding performance under normal temperature conditions. The resistance of the separator under normal temperature conditions is 1.32 Ω or less, and particularly 1.1 Ω or less. Under a pressure less than or equal to 1 MPa, the bonding force of the separator is 0.23 N/m or less, and particularly, 0.1 N/m or less. Under a pressure greater than or equal to 2 MPa, the bonding force of the separator is at least 0.34 N/m, particularly, at least 0.50 N/m, and more particularly, at least 0.60 N/m. The separator and a preparation method thereof will be described in detail below.

### Separator

The separator according to this application may include: a porous separator substrate; and a pressure-sensitive coating applied onto at least one surface of the separator substrate. The pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%. The pressure-sensitive binder polymer may include a binder polymer and a plasticizer.

After extensive research, the applicant hereof has noticed that, a pressure-sensitive separator of high ion-conductivity and bonding performance under normal temperature conditions can be prepared by using a pressure-sensitive coating applied onto at least one surface of a porous separator substrate. The pressure-sensitive coating includes a first organic particle at a mass percent of 40 wt% to 90 wt %, a pressure-sensitive binder polymer at a mass percent of 10 wt% to 20 wt %, and optionally a second organic particle at a mass percent of 0 wt% to 50 wt %. The pressure-sensitive binder polymer may include a binder polymer and a plasticizer. The binder polymer and the plasticizer work together to impart good pressure-sensitive properties to the pressure-sensitive binder polymer, and in turn, impart good pressure-sensitive properties to the separator, so that the bonding force of the separator is 0.23 N/m or less, and particularly, 0.1 N/m or less, under a pressure less than or equal to 1 MPa. In this way, different layers of the separator can be prevented from sticking to each other during rewinding and storage of the separator, and the separator can bond to the electrode plate substantially under a pressure greater than or equal to 2 MPa. Therefore, in preparing a battery cell from the separator, the electrode plate and the separator can be closely fitted under normal temperature conditions and an appropriate pressure. On the one hand, the scrap of the battery cell, deterioration of the cell performance, and safety hazards are prevented from being caused by dislocation between the electrode plate and the separator. On the other hand, the tunnel furnace and the second lamination step in a conventional battery cell production process can be omitted, thereby saving production space and production time, reducing energy consumption, and significantly increasing the productivity of battery cells. In addition, the shaping performance, safety performance, and kinetic performance of the battery cells can be enhanced, thereby improving the safety performance and kinetic performance of a secondary battery containing the battery cell and an electrical device containing the secondary battery.

In some embodiments, a mass ratio between the binder polymer and the plasticizer included in the pressure-sensitive binder polymer may be (4 to 19): 1, and optionally (4 to 11): 1. The mass percent of the plasticizer included in the pressure-sensitive binder polymer falls within the foregoing range, so as to ensure that a relatively great bonding force is generated between the electrode plate and the separator, without resulting in an increase of the resistance of the separator or a decline in the cycle performance of the secondary battery.

The mass percent of the plasticizer may be determined by using an STA449F3 thermogravimetric analyzer manufactured by Japan-based Shimadzu. As a specific example, the test method is as follows: Taking approximately 10 mg of a pressure-sensitive binder polymer solid, with an original mass denoted as M0; and increasing the temperature to 200 ° C, and measuring the mass, denoted as M1, so that the mass percent of the plasticizer is (M0-M1), and the mass percent of the binder polymer is M0-(M0-M1). The test conditions are: temperature range: -100 to 400°C ; nitrogen atmosphere; heating speed: 10 °C /min.

In some embodiments, the pressure-sensitive binder polymer may be of a core-shell structure, a core and a shell of the core-shell structure each may include the binder polymer and the plasticizer, a mass ratio between the binder polymer and the plasticizer in the core may be (2 to 5): 1, and optionally (3 to 4): 1, and a mass ratio between the binder polymer and the plasticizer in the shell may be (6 to 10): 1, and optionally (7 to 9): 1. Both the core and shell of the core-shell structure are made of the binder polymer and the plasticizer, thereby further improving the pressure-sensitive properties of the pressure-sensitive binder polymer, and further improving the kinetic performance of the separator. On the other hand, with the plasticizer included in the pressure-sensitive binder polymer, the plasticizer can quickly migrate to a position between the binder polymer and the separator base material under a given pressure (for example, under 1 to 2 MPa) to plasticize the binder polymer and stretch a molecular chain of the binder polymer. In this way, intermolecular hydrogen bonding occurs between the binder polymer and the additives, for example, negative electrode plate additives such as SBR binder and CMC thickener, and positive electrode plate additives such as PVDF, interfacial infiltration is improved, and interfacial riveting is enhanced. Under a pressure greater than or equal to 2 MPa, the core structure is crushed and the plasticizer in the core is released, thereby further enhancing the above effects.

In some embodiments, a part of the plasticizer is grafted onto the binder polymer. Optionally, based on a weight of the plasticizer, at least 5 wt% of the plasticizer is grafted onto the binder polymer. When a part of the plasticizer is grafted onto the binder polymer, the plasticizer is prevented from largely migrating into an electrolytic solution during cycles. The migrated plasticizer may consume various functional additives in the electrolytic solution, increase the resistance value of the separator, and affect the kinetic performance of the battery cell. When at least 5% of the plasticizer by weight is grafted onto the main chain of the binder polymer, a "coupling" effect may be formed between the separator and the electrode plate, thereby improving the durability of the bonding under normal temperature conditions, reducing the rebound, and further preventing an excessive amount of the plasticizer from migrating to the electrolytic solution during cycles to affect the performance of the battery cell. The graft rate may be determined by an infrared test method. A specific test method may be: working out a Fourier Transform infrared spectrogram of the binder polymer, the plasticizer, and the pressure-sensitive binder polymer separately by using Fourier Transform Infrared Spectroscopy; finding, at a 1500 to 1700 cm⁻¹ position of the pressure-sensitive binder polymer in the spectrogram, a peak that is distinct from the binder polymer and the stand-alone plasticizer, where the peak represents the grafted plasticizer, and the area under the peak represents the amount of the grafted plasticizer; and calculating the graft rate based on such data.

In some embodiments, an average particle diameter of the pressure-sensitive binder polymer may be 0.5 to 3.0 µm, and optionally 0.8 to 2.0 µm. The pressure-sensitive binder polymer of an appropriate average particle diameter facilitates uniform distribution of the binder polymer in the first organic particles or the second organic particles, improves exertion of the performance of bonding the core and shell of the binder polymer to the electrode plate under a given pressure, and improves the resistance of the separator effectively.

The average particle diameter of the pressure-sensitive binder polymer may be determined by using a laser particle size analyzer (such as Malvern Mastersizer 3000) with reference to the standard GB/T 19077.1-2016.

In some embodiments, a DSC melting point of the pressure-sensitive binder polymer may be -50 °C to 100 °C, and optionally -45 °C to 60 °C. When the DSC melting point of the pressure-sensitive binder polymer falls within the above range, it is ensured that an appropriate bonding force is exerted at a normal temperature, and it is avoided that an excessive bonding force is generated under a pressure of 1 MPa and results in bonding of the separator during rewinding. At the same time, it is avoided that a deficient bonding force is generated at a normal temperature of 2 MPa, results in weak bonding between the separator and the electrode plate, and adversely affects the shaping of the battery cell.

In some embodiments, the binder polymer includes a copolymer formed by copolymerizing a reactive monomer mixture, and the reactive monomer mixture includes at least one of the following first monomers, at least one of the following second monomers, at least one of the following third monomers, and at least one of the following reactive dispersants:
first monomers, which, with a melting point typically higher than 80°C , may include: acrylic acid, methacrylic acid, methyl methacrylate, tert-butyl methacrylate, isobornyl methacrylate, methylol acrylamide, acrylamide, styrene, and acrylonitrile;
second monomers, which, with a melting point typically not higher than 80°C , may include: C₄ to C₂₂ alkyl acrylate, isobutyl acrylate, isooctyl acrylate, tert-butyl acrylate, 2-ethylhexyl (isooctyl) acrylate, cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene ureaethyl methacrylate, dicyclopentene ethoxy methacrylate, tetrahydrofuran methacrylate, trifluoroethyl methacrylate, dimethylaminoethyl methacrylate, diethylaminoethyl methacrylate, ethylene ureaethyl methacrylate, propylene methacrylate, dicyclopentene ethoxy methacrylate, tetrahydrofuran methacrylate, and trifluoroethyl methacrylate;
third monomers, which are cross-linking monomers and each contain at least one of hydroxyl, amino, or a double bond and may include: 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloyloxypropyltrimethoxysilane, N-methylol acrylamide, N-butoxymethyl(meth)acrylamide, diacetone acrylamide (DAAM), ethyl acetoacetate methacrylate (AAEM), vinylstyrene, epoxy resin (with an epoxy value of 0.35 to 0.50), and divinylbenzene; and
reactive dispersants, which are copolymerized with the first monomer, the second monomer, and the third monomer at the same time of serving a dispersion function during synthesis of the pressure-sensitive binder polymer, and which may include: polyvinyl alcohol, polypropylene alcohol, polypropylene glycol, polyethylene glycol, and polyethylene acid alcohol. Optionally, the alcoholysis degree of the reactive dispersants is greater than or equal to 85%, and an average polymerization degree of the reactive dispersants is 400 to 2000; and optionally, the alcoholysis degree is greater than or equal to 88%, and the average polymerization degree is 500 to 1600.

When the binder polymer includes a copolymer formed by copolymerizing a reactive monomer mixture, and the reactive monomer mixture includes at least one of the foregoing first monomers, at least one of the foregoing second monomers, at least one of the foregoing third monomers, and at least one of the foregoing reactive dispersants, proper swelling and bonding of the binder polymer are ensured. In this way, the pressure-sensitive binder polymer is ensured to achieve a proper swelling rate, sufficient pressure sensitivity, high bonding performance, and also an appropriate elastic modulus, so as to ensure a good shaping effect and high kinetic performance and safety performance of the battery cell.

In some embodiments, the plasticizer may be one or more selected from: C₄ to C₁₀ glycerol alkyl diether or monoether; C₄ to C₁₀ glycerol carboxylic acid monoester or diester; C₄ to C₁₀ propylene glycol alkyl monoether; and glycerol.

In some embodiments, the pressure-sensitive binder polymer may be synthesized according to the following synthesis method, including the following steps:
Step I: Adding an emulsifier (such as allyl sulfonate) at a mass percent of 0.1 wt% to 1 wt% and an oligomer (such as octadecyl methacrylate) at a mass percent of 2 wt% to 3 wt% sequentially into a solvent (such as deionized water), and dispersing the emulsifier and the oligomer by using a homogenizer at a rotation speed of 8000 to 12000 r/min (such as 10000 r/min) under a dispersion reaction temperature of 20 °C to 40 °C (such as 25 °C) for a dispersion time of 20 to 60 min (such as 50 min) to obtain a first mixed solution. The mass percent is a relative percentage by weight among a total weight of the reactive monomer mixture, the agents (including an emulsifier, a stabilizer, an aqueous initiator), and the plasticizer, hereinafter the same. The reactive monomer mixture is added during synthesis of the pressure-sensitive binder polymer and contains the first monomer, the second monomer, the third monomer, and reactive dispersant. The number-average molecular weight of the oligomer is less than or equal to 1000, and the melting point of the oligomer is 0 °C to 30 °C.
Step II: Adding a stabilizer at a mass percent of 1 wt% to 4 wt% into the first mixed solution, and mixing the stabilizer by using the homogenizer at a rotation speed of 6000 to 8000 r/min (such as 6500 r/min) under a reaction temperature of 20 °C to 60 °C (such as 45 °C) for a time of 20 to 60 min (such as 30 min) to obtain a second mixed solution. The stabilizer is, for example, at least one selected from: polyethylene oxide, allyl polyether sulfate, methylene succinic acid (itaconic acid), styrene sulfonic acid, sodium vinyl sulfonate, sodium nanocellulose.
Step III: Adding an aqueous initiator at a mass percent of 0.05 wt% to 0.5 wt% into the second mixed solution. The aqueous initiator is, for example, at least one selected from: sodium bicarbonate, benzoyl peroxide, lauroyl peroxide, cumene hydroperoxide, tert-butyl hydroperoxide, di-tert-butyl peroxide, dicumyl peroxide, tert-butyl peroxybenzoate, tert-butyl peroxy tert-valerate, methyl ethyl ketone peroxide, cyclohexanone peroxide diisopropyl peroxydicarbonate, dicyclohexyl peroxydicarbonate, potassium persulfate, sodium persulfate, ammonium persulfate, azobisisobutyronitrile, and azobisisoheptanenitrile. Mixing the aqueous initiator by using the homogenizer at a rotation speed of 8000 to 12000 r/min (such as 8000 r/min) for a time of 20 to 60 min (such as 30 min) under a reaction temperature of 60 °C to 80 °C (such as 72 °C) to obtain a third mixed solution.
Step IV: Dripping the reactive monomer mixture at a mass percent of 35 wt% to 45 wt% into the third mixed solution evenly (the reactive monomer mixture is dripped gradually at such a speed that the dripping finishes in 60 minutes) under conditions that the homogenizer is rotating at a speed of 100 to 1000 r/min (such as 400 r/min), and keeping reaction for 80 to 100 min (such as 80 min) to obtain a fourth mixture.
Step V: Letting the fourth mixture continue to react at a reaction temperature of 80 °C to 90 °C (such as 84 °C) under conditions that the homogenizer is rotating at a speed of 12000 to 18000 r/min (such as 15000 r/min), and keeping reaction for 120 to 240 min (such as 180 min) to obtain a fifth mixture.
Step VI: Adding a plasticizer such as glycerol at a mass percent of 10 wt% to 20 wt% into the fifth mixture, letting the mixture react at a temperature of 80 °C to 90 °C (such as 84 °C) under conditions that the homogenizer is rotating at a speed of 12000 to 18000 r/min (such as 15000 r/min), and keeping reaction for 120 to 240 min (such as 180 min) to obtain a sixth mixture.
Step VII: Adding an aqueous initiator such as ammonium persulfate-sodium bicarbonate at a mass percent of 0.05 wt% to 0.5 wt% into the sixth mixture. Stirring the mixture by using the homogenizer at a rotation speed of 8000 to 12000 r/min (such as 8000 r/min) for a time of 20 to 60 min (such as 30 min) under a reaction temperature of 60 °C to 80 °C (such as 72 °C) to obtain a seventh mixture.
Step VIII: Dripping the reactive monomer mixture at a mass percent of 30 wt% to 40 wt% into the seventh mixture evenly (the reactive monomer mixture is dripped gradually at such a speed that the dripping finishes in 60 minutes) under conditions that the homogenizer is rotating at a speed of 100 to 1000 r/min (such as 400 r/min), and keeping reaction for 100 to 160 min (such as 120 min) to obtain an eighth mixture.
Step IX: Adding a plasticizer such as glycerol at a mass percent of 5 wt% to 20 wt% into the eighth mixture, letting the mixture react at a temperature of 80 °C to 90 °C (such as 84 °C) under conditions that the homogenizer is rotating at a speed of 12000 to 18000 r/min (such as 15000 r/min), and keeping reaction for 120 to 240 min (such as 180 min) to obtain a ninth mixture.
Step X: Decreasing the temperature of the ninth mixture to below 50 °C, and filtering the mixture to obtain a filtered product, that is, a core-shell structured pressure-sensitive binder polymer. A person skilled in the art may synthesize a non-core-shell structured pressure-sensitive binder polymer by referring to the above method (omitting step VII to step IX, and changing the mass percent of the added plasticizer and reactive monomer mixture accordingly).

In some embodiments, an average thickness of the pressure-sensitive coating may be 2 to 20 µm, and optionally 2 to 15 µm.

In some embodiments, an average particle diameter of the first organic particle may be 5 to 30 µm, and optionally 5 to 20 µm. The average particle diameter of the first organic particle may be determined by using a laser particle size analyzer (such as Malvern Mastersizer 3000) with reference to the standard GB/T 19077.1-2016. When the average particle diameter of the first organic particle is controlled to be 5 to 30 µm, the first organic particle possesses a relatively large average particle diameter. On the one hand, the effective contact area between the electrode plate and the separator is increased, thereby greatly improving the bonding effect between the electrode plate and the separator. On the other hand, the organic particles are prevented from permeating into the pores formed on the separator substrate. In addition, large pores give rise to relatively large voids, thereby solving the problem of poor air permeability of the separator, reducing the probability of blocking the pores of the separator by small particles, and avoiding the risk of increasing the internal resistance. In addition, the corners of the battery cell do not need to be laminated during manufacture (especially for a prismatic battery). Therefore, at the corners, the separator is not bonded to the electrode plate, and is unable to effectively transfer and release the accumulated stress of the electrode plate toward various directions. Moreover, the structural characteristics of the battery module of the prismatic battery cause the corners to be propped, and the stress formed by the expansion of the electrode plate is hardly releasable. Therefore, if there is not enough space at the corners of the battery, the electrode plate may break off when the battery completes a specific number of cycles, that is, when the stress is greater than the elongation rate of the copper foil or aluminum foil. The broken electrode plate may pierce the separator to cause severe safety hazards. By contrast, in this application, because the first organic particle has a relatively large average particle diameter, and is compressible to some extent, the first organic particle existent at the corner of the battery cell can effectively provide a space for releasing the stress at the corner.

In some embodiments, a DSC melting point of the first organic particle may be -50 °C to 200 °C, and optionally -40 °C to 160 °C. When the DSC melting point of the first organic particle falls within the above range, the first organic particle can withstand the swelling of the electrolytic solution. On the one hand, excessive consumption of the electrolytic solution is avoided, and the residual monomers are not prone to be dissociated by the electrolytic solution. The dissociated monomers may block the separator, and impair the kinetic performance of the battery cell. On the other hand, the drastic decrease of the bonding force between the separator and the electrode plate is avoided, and the electrode plate is not prone to be crushed by the first organic particles to result in a decline in the safety performance.

In some embodiments, a weight-average molecular weight of the first organic particle may be 300×10³ g/mol to 800×10³ g/mol, and optionally 400×10³ g/mol to 650×10³ g/mol.

That the weight-average molecular weight of the first organic particle falls within the above range ensures a proper swelling degree of the first organic particle and a proper bonding force between the first organic particle and the electrode plate. For the first organic particles of the same type, an excessive weight-average molecular weight leads to a deficient swelling degree, thereby being adverse to the supplementation of the electrolytic solution at a later stage of cycling of the battery cell and impairing the performance of the battery cell. Further, the excessive weight-average molecular weight leads to an excessive modulus of the first organic particle, direct crushing of the electrode plate, and deterioration of the safety performance of the battery cell. If the weight-average molecular weight is deficient, the swelling degree will be unduly high. Under the action of the electrolytic solution, a large amount of residual monomers of the first organic particles will dissolve out, thereby increasing the resistance of the separator and deteriorating the electrolytic solution and the kinetic performance of the battery cell.

The number-average molecular weight (Mw) is measured by using an HLC-8320GPC gel permeation chromatography (SuperMultiporeHZ series semi-micro SEC column, using polystyrene as a standard specimen) manufactured by Japan-based Tosoh Corporation. Test process: Dissolving 2 mg of polymer powder specimen in a DMF solvent that is 2 mL in volume and specially applicable to the GPC model, and then feeding the specimen in an amount of 2.5 µL for testing. Parameter settings: pump flow: 5 mL/min; filling volume: 100 µL; temperature control range: 60 °C; data collection frequency: 100 Hz.

In some embodiments, the first organic particle may be one or more polymers, and each of the polymers includes one or more groups selected from halogen, phenyl, epoxy, cyano, ester, and amido.

In some embodiments, the first organic particle may be at least one selected from: a homopolymer or copolymer of fluorine-containing alkenyl monomer units; a homopolymer or copolymer of olefin monomer units; a homopolymer or copolymer of unsaturated nitrile monomer units; a homopolymer or copolymer of alkylene oxide monomer units; a dimer, homopolymer, or copolymer of monosaccharide monomer units; and a modified compound of any one of the foregoing homopolymers or copolymers.

In some embodiments, the fluorine-containing alkenyl monomer units may be one or more selected from difluoroethylene, vinylidene fluoride, trifluoroethylene, chlorotrifluoroethylene, tetrafluoroethylene, hexafluoropropylene, or a derivative thereof.

In some embodiments, the olefin monomer units may be one or more selected from ethylene, propylene, butadiene, isoprene, styrene, or a derivative thereof.

In some embodiments, the unsaturated nitrile monomer units may be one or more selected from acrylonitrile, methacrylonitrile, or a derivative thereof.

In some embodiments, the alkylene oxide monomer units may be one or more selected from ethylene oxide, propylene oxide, or a derivative thereof.

In some embodiments, the monosaccharide monomer units may be selected from glucose or a derivative thereof.

In some embodiments, the first organic particle may be at least one selected from: polyperfluoroethylene, polyvinylidene difluoride, poly(vinylidene difluoride-co-hexafluoropropylene), poly(vinylidene difluoride-co-trichloroethylene), poly(styrene-co-methyl methacrylate), poly(styrene-co-butyl acrylate), polymethyl methacrylate, polyacrylonitrile, polyvinyl acetate, poly(ethylene-co-vinyl acetate), polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose.

In some embodiments, the first organic particle may be at least one selected from: poly(vinylidene difluoride-co-hexafluoropropylene), poly(styrene-co-butyl acrylate), polyperfluoroethylene, polyvinylidene difluoride, and poly(vinylidene difluoride-co-trichloroethylene).

When the first organic particle is selected from the above substances, the first organic particle exhibits an appropriate swelling degree and is of appropriate adhesivity to the electrode plate. A proper bonding force is achieved between the first organic particle and the pressure-sensitive binder polymer. At the same time, the pressure-sensitive binder polymer on the first organic particle is caused to be uniformly dispersed, thereby ensuring high bonding performance and kinetic performance.

In some embodiments, a mass ratio between the first organic particle and the second organic particle may be (1 to 4): 1, and optionally (1.5 to 2.5): 1. When the mass ratio between the first organic particle and the second organic particle falls within the above range, the infiltration effect and distribution uniformity of the electrolytic solution are improved effectively, thereby further enhancing the high-temperature storage performance of the battery. Particularly, when a foreign matter pierces the battery in use, the second organic particle can instantly wrap the foreign matter and the exposed copper foil or aluminum foil to form a first polymer insulation layer, thereby effectively reducing the probability of short circuits between the positive electrode plate and the negative electrode plate, and enhancing the safety performance of the battery. With the increase of the temperature around the foreign matter, the first organic particle forms a firmer second polymer insulation layer around the first polymer insulation layer, thereby further enhancing the safety performance of the battery.

In some embodiments, an average particle diameter of the second organic particle may be 0.5 to 10 µm, and optionally 2 to 8 µm. The average particle diameter of the second organic particle may be determined by using a laser particle size analyzer (such as Malvern Mastersizer 3000) with reference to the standard GB/T 19077.1-2016. When the second organic particle that falls within the above particle size range is in use, sufficient and unevenly distributed voids are further formed between the first organic particle and the second organic particle during the normal operation of the secondary battery, so as to ensure smoothness of an ion transport channel, and in turn, further ensure good cycle performance of the battery. In addition, when the secondary battery is operating at a high temperature (for example, when a high temperature is caused by a fault of the battery cell), large-area gel film structures can be formed between the first organic particle and the second organic particle to reduce or block ion transport channels, prevent further contact between the positive electrode and the negative electrode, defer the thermal runaway of the battery, and in turn, further ensure good safety performance of the battery. With a relatively large average particle diameter, the first organic particle is usually designed as a secondary particles. With a relatively small average particle diameter, the second organic particle is usually designed as a primary particle. At the same time of enhancing the bonding force between the separator and the electrode plate, the first organic particle and the second organic particle work together to ensure that the separator includes non-uniform pores of a moderate porosity. In addition, on the one hand, during the preparation of the battery cell, the first organic particle is a secondary particle, facilitates formation of a uniform coating interface, and effectively mitigates the problem of tab dislocation during the preparation of the battery cell. The second organic particle is a primary particle, and large-area gel film structures are hardly formable between the second organic particles to block channels, thereby further enhancing the rate performance and safety performance of the battery.

In some embodiments, a DSC melting point of the second organic particle may be -30 °C to 100 °C, and optionally -30 °C to 70 °C. When the DSC melting point of the second organic particle falls within the above range, the second organic particle can withstand the swelling of the electrolytic solution. On the one hand, excessive consumption of the electrolytic solution is avoided, and the residual monomers are not prone to be dissociated by the electrolytic solution. The dissociated monomers may block the separator, and impair the kinetic performance of the battery cell. On the other hand, the drastic decrease of the bonding force between the separator and the electrode plate is avoided, and the electrode plate is not prone to be crushed by the second organic particles to result in a decline in the safety performance.

The DSC melting point bears the meaning well known in the art, and may be measured by instruments and methods well known in the art, for example, may be measured by a DSC 200F3 melting point tester manufactured by Germany-based NETZSC Company. As a specific example, a test method is as follows: Taking approximately 10 mg of the material as a specimen for testing. The test conditions are: temperature range: -100 to 200 °C; nitrogen atmosphere; heating speed: 10 °C /min. The temperature corresponding to an absorption peak during the first-time temperature rise is the corresponding DSC melting point.

In some embodiments, a weight-average molecular weight of the second organic particle may be 10×10³ g/mol to 100×10³ g/mol, and optionally 20×10³ g/mol to 80×10³ g/mol.

That the weight-average molecular weight of the second organic particle falls within the above range ensures a proper swelling degree of the second organic particle and a proper bonding force between the second organic particle and the electrode plate. For the second organic particles of the same type, an excessive weight-average molecular weight leads to a deficient swelling degree, thereby being adverse to the supplementation of the electrolytic solution at a later stage of cycling of the battery cell and impairing the performance of the battery cell. Further, the excessive weight-average molecular weight leads to an excessive modulus of the second organic particle, direct crushing of the electrode plate, and deterioration of the safety performance of the battery cell. If the weight-average molecular weight is deficient, the swelling degree will be unduly high. Under the action of the electrolytic solution, a large amount of residual monomers of the second organic particles will dissolve out, thereby increasing the resistance of the separator and deteriorating the electrolytic solution and the kinetic performance of the battery cell. The method for measuring the weight-average molecular weight of the second organic particle is the same as the method for measuring the weight-average molecular weight of the first organic particle.

In some embodiments, the second organic particle is one or more polymers, and each of the polymers includes one or more groups selected from phenyl, epoxy, cyano, ester, hydroxyl, carboxyl, sulfonyl ester, and pyrrolidone.

In some embodiments, the second organic particle may be at least one selected from: a homopolymer or copolymer of acrylate monomer units; a homopolymer or copolymer of acrylic acid monomer units; a homopolymer or copolymer of unsaturated nitrile monomer units; a homopolymer or copolymer of alkenyl monomer units; a homopolymer or copolymer of styrene monomer units; a homopolymer or copolymer of epoxy monomer units; a polyurethane compound; a rubber compound; a dimer, homopolymer, or copolymer of monosaccharide monomer units; and a modified compound of any one of the foregoing homopolymers or copolymers.

In some embodiments, the acrylate monomer units may be one or more selected from methyl acrylate, ethyl acrylate, propyl acrylate, butyl acrylate, methyl methacrylate, butyl methacrylate, isooctyl methacrylate, or a derivative thereof.

In some embodiments, the acrylic acid monomer units may be one or more selected from acrylic acid, methacrylic acid, or a derivative thereof.

In some embodiments, the unsaturated nitrile monomer units may be one or more selected from acrylonitrile, methacrylonitrile, or a derivative thereof.

In some embodiments, the alkenyl monomer units may be one or more selected from ethylene, vinyl acetate, butadiene, or a derivative thereof.

In some embodiments, the styrene monomer units may be one or more selected from styrene, methylstyrene, or a derivative thereof.

In some embodiments, the epoxy monomer units may be one or more selected from ethylene oxide, propylene oxide, or a derivative thereof.

In some embodiments, the monosaccharide monomer units may be selected from glucose or a derivative thereof.

In some embodiments, the second organic particle is at least one selected from: polymethyl methacrylate, polyacrylonitrile, polyvinylpyrrolidone, polyvinyl acetate, poly(ethylene-co-vinyl acetate), poly(styrene-co-methyl methacrylate), poly(styrene-co-butyl acrylate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, poly(acrylonitrile-co-styrene-co-butadiene), poly(styrene-co-butyl acrylate-co-isooctyl acrylate), and polyimide.

When the second organic particle is selected from the above substances, the second organic particle exhibits an appropriate swelling degree and is of appropriate adhesivity to the electrode plate. A proper bonding force is achieved between the first organic particle and the pressure-sensitive binder polymer. At the same time, the pressure-sensitive binder polymer on the first organic particle is caused to be uniformly dispersed, thereby ensuring high bonding performance and kinetic performance.

In some embodiments, a porosity of the separator substrate may be 10% to 95%, a pore diameter of the separator substrate may be 20 to 60 nm, and a thickness of the separator substrate may be 3 to 12 µm, and optionally 5 to 9 µm. When the porosity of the separator substrate falls within the above range, a good trade-off between the kinetics and safety performance of the secondary battery is achieved. When the thickness of the separator substrate falls within the above range, a good trade-off between the energy density and safety performance of the secondary battery is achieved.

In some embodiments, the separator substrate includes one or more films or nonwovens selected from: polyethylene, polypropylene, polyethylene terephthalate, polybutylene terephthalate, polyester, polyacetal, polyamide, polycarbonate, polyimide, polyether ether ketone, polyaryl ether ketone, polyetherimide, polyamideimide, polybenzimidazole, polyethersulfone, polyphenylene ether, a cycloolefin copolymer, polyphenylene sulfide, and polyethylene naphthalene.

### Method for preparing a separator

This application further provides a method for preparing a separator, including the following steps:
S1) adding a first organic particle and a dispersant into a solvent to form a first polymer solution;
S2) adding a pressure-sensitive binder polymer into the first polymer solution obtained in step S1), and mixing to form a second polymer solution;
S3) optionally, adding a second organic particle into the second polymer solution obtained in step S2), and mixing to form a third polymer solution; and
S4) coating at least one surface of a porous separator substrate with the second polymer solution obtained in step S2) or the third polymer solution obtained in step S3), and drying to obtain a separator.

The separator includes a pressure-sensitive coating formed on at least one surface of the separator substrate; the pressure-sensitive coating includes a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%; and the pressure-sensitive binder polymer includes a binder polymer and a plasticizer.

In some embodiments, nonrestrictive examples of the dispersant used in step S1) may include acrylates (for example, BYK 22136), branched alcohol polyether (for example, Dow Chemical Company TMN-6), and polyethylene glycol trimethyl nonyl ether. Nonrestrictive examples of the solvent used in step S1) may include acetone, tetrahydrofuran, dichloromethane, chloroform, dimethylformamide, N-methyl-2-pyrrolidone, cyclohexane, water, or a mixture thereof.

In some embodiments, nonrestrictive examples of the coating method used in step S4) may include dip coating, die coating, roller coating, comma coating, spin coating, or a combination thereof. The single-side coating weight after drying may be 0.42 to 0.52 g/m².

### [Outer package]

In some embodiments, the secondary battery may include an outer package configured to package the positive electrode plate, the negative electrode plate, the separator, and the electrolyte. As an example, the positive electrode plate, the negative electrode plate, and the separator may be stacked or wound to form a stacked-type battery cell or a jelly-roll battery cell. The battery cell is packaged in the outer package. The electrolyte may be an electrolytic solution, and the electrolytic solution infiltrates in the battery cell. The number of battery cells in a secondary battery may be one or more, and may be adjusted as required.

In some embodiments, the outer package of the secondary battery may be a soft package such as a pouch-type soft package. The material of the soft package may be plastic such as one or more of polypropylene (PP), polybutylene terephthalate (PBT), or polybutylene succinate (PBS). The outer package of the secondary battery may also be a hard casing such as an aluminum casing.

In some embodiments, the positive electrode plate, the negative electrode plate, and the separator may be made into an electrode assembly by winding or stacking.

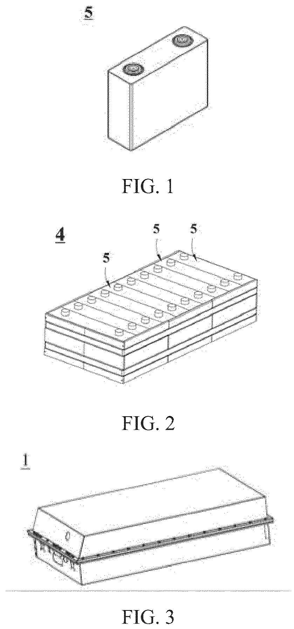

The shape of the secondary battery is not particularly limited in this application, and may be cylindrical, prismatic or any other shape. FIG. 1 shows a prismatic secondary battery 5 as an example.

The secondary battery according to this application may be assembled to form a battery module. The number of secondary batteries in a battery module may be plural, and may be adjusted according to practical applications and capacity of the battery module.

FIG. 2 shows a battery module 4 as an example. Referring to FIG. 2, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a housing that provides an accommodation space. The plurality of secondary batteries 5 are accommodated in the accommodation space.

In this application, the battery module containing the secondary batteries may be assembled to form a battery pack. The number of the battery modules contained in a battery pack may be adjusted according to practical applications and the capacity of the battery pack.

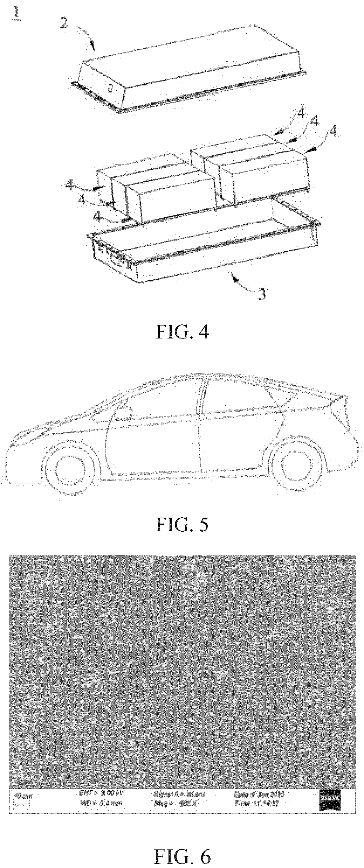

FIG. 3 and FIG. 4 show a battery pack 1 as an example. Referring to FIG. 3 and FIG. 4, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### [Electrical device]

This application further provides an electrical device. The electrical device includes the secondary battery according to this application. The secondary battery is configured to provide a power supply for the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 5 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the electrical device may be a mobile phone, a tablet computer, a notebook computer, or the like. The electrical device is generally required to be thin and light, and may employ a secondary battery as a power supply.

### Embodiments

The following describes embodiments of this application. The embodiments described below are illustrative, and are merely intended to construe this application but not to limit this application. Unless other techniques or conditions are expressly specified in an embodiment hereof, the techniques or conditions described in the literature in this field or in an instruction manual of the product may apply. A reagent or instrument used herein without specifying the manufacturer is a conventional product that is commercially available in the market.

### Embodiment 1

### Preparing a separator

1) Making a separator substrate from a polyethylene microporous film with a thickness of approximately 9 µm, a pore diameter of approximately 50 nm, and a porosity of approximately 38%.
2) Adding a first organic particle and a dispersant (BYK-22136) into water to form a first polymer solution. The first organic particle is poly(vinylidene difluoride-co-hexafluoropropylene. Based on the weight of the vinylidene fluoride (VDF) monomer and the hexafluoropropylene (HFP) monomer, the mass percent of the HFP monomer is approximately 9%. The weight-average molecular weight of the first organic particle is approximately 600×10³ g/mol, the average particle diameter of the first organic particle is approximately 7 µm, and DSC melting point of the first organic particle is approximately 150°C ).
3) Adding the pressure-sensitive binder polymer into the first polymer solution obtained in step 2), and stirring to form a second polymer solution in which the solid content is 12 wt%. The glass transition temperature of the pressure-sensitive binder polymer is approximately 10 °C, and the average particle diameter of the pressure-sensitive binder polymer is approximately 1.1 µm. The pressure-sensitive binder polymer includes a binder polymer and a plasticizer mixed at a mass ratio of 5:1, and some deionized water. Approximately 8% by weight of the plasticizer is grafted onto the binder polymer. The binder polymer is a copolymer that is formed by copolymerizing 30 wt% isobutyl acrylate, 25% isooctyl acrylate, 5 wt% 2-hydroxypropyl methacrylate, 15 wt% styrene, 22 wt% acrylonitrile, and 3 wt% polyvinyl alcohol. The plasticizer is glycerol. The mass ratio between the first organic particle and the pressure-sensitive binder polymer contained in the second polymer solution is 85: 15.
4) Applying an aqueous coating slurry onto one surface of the separator substrate by spin spraying, where the aqueous coating slurry is the second polymer solution with a solid content of 12 wt% obtained in step 3); and drying the slurry to make a separator. The prepared separator includes the separator substrate and a pressure-sensitive coating applied onto one surface of the separator substrate. The pressure-sensitive coating is approximately 3 µm thick, and includes a first organic particle and a pressure-sensitive binder polymer mixed at a mass ratio of 85: 15. The pressure-sensitive binder polymer includes a binder polymer and a plasticizer mixed at a mass ratio of 5: 1. Approximately 8% by weight of the plasticizer is grafted onto the binder polymer.

### Preparing a secondary battery

Mixing LiNi_{1/3}Mn_{1/3}Co_{1/3}O₂ as an active material, acetylene black as a conductive agent, and polyvinylidene difluoride (PVDF) as a binder at a mass ratio of 94: 3: 3 in an N-methyl-pyrrolidone solvent, and stirring well to form a positive slurry. Coating an aluminum foil with the slurry, and then performing drying and cold calendering to obtain a positive electrode plate. The coating weight of the positive active material on the positive electrode plate is 0.32 g/1540.25 mm², and the density of the positive active material is 3.45 g/cm³.

Mixing well artificial graphite as an active material, acetylene black as a conductive agent, styrene-butadiene rubber (SBR) as a binder, and sodium carboxymethyl cellulose (CMC) as a thickener at a mass ratio of 95: 2: 2: 1 in a deionized water solvent to obtain a negative slurry. Coating a copper foil with the slurry, and performing drying and cold calendering to obtain a negative electrode plate. The coating weight of graphite on the negative electrode plate is 0.18 g/1540.25 mm², and the density of the graphite is 1.65 g/cm³.

Mixing ethylene carbonate (EC), ethyl methyl carbonate (EMC), and diethyl carbonate (DEC) at a volume ratio of 3: 5: 2, and dissolving LiPF₆ in the forgoing solution homogeneously to obtain an electrolytic solution. In the electrolytic solution, the concentration of the LiPF₆ is 1 mol/L.

The separator prepared in each embodiment or comparative embodiment is ready for use in a battery cell.

Stacking the positive electrode plate, the separator, and the negative electrode plate sequentially, placing the separator between the positive electrode and the negative electrode to serve a function of separation, and winding the stacked structure to obtain a bare cell. Putting the bare cell into an outer package, injecting an electrolytic solution, and sealing the package to obtain a secondary battery. It is hereby noted that, if the separator is coated on a single side, the coating surface is oriented toward the cathode (that is, the positive electrode plate) side.

Evaluating the bonding performance of the separator

The test process is as follows:
1. Select a prepared separator of 300 mm in length and 100 mm in width, and the positive electrode plate and negative electrode plate prepared above.
2. Wrap the separator with paper on both sides, and die-cut the separator into specimens of 54.2 mm × 72.5 mm in size by using a die-cut mold and a stamping press.
3. Stack the specimen of the separator together with the positive electrode plate or negative electrode plate neatly. Leave the separator to face up, and pad the upper side and lower side with a 130 mm × 130 mm Teflon sheet separately. Place the stacked specimen in the middle of a cardboard, and cover the specimen with a 150 mm × 160 mm cardboard.
4. Put the stacked specimen into a flat press machine, and adjust the pressure and the air pressure, where the pressure is 350 kg ± 10 kg (equivalent to approximately 0.87 MPa) or the pressure is 850 kg ± 10 kg (equivalent to approximately 2.24 MPa). Set the temperature T to 25 °C, set the time to 15 s, and perform hot pressing.
5. Die-cut the hot pressed specimen into small pieces of 72.5 mm × 15 mm in size by using a die-cut mold and a stamping press.
6. Affix one side of the electrode plate onto a steel sheet fixedly by using a double-sided tape, and bond a separator to the other side of the electrode plate. Stick a 15-mm wide A4 paper strip and the separator together by using double-sided tape, thereby completing preparation of the specimen. During the test, fix the steel sheet that holds the electrode plate, and pull the A4 paper strip upward to detach the separator from the electrode plate by using a tensile tester.
7. Turn on a GoTech tensile test machine, and set the item to "bonding force", set the speed to 50 mm/min, and set the initial jig spacing to 40 mm.
8. Place the specimen between the upper chuck and the lower chuck of the jig. Fix the end of the steel sheet to the lower chuck, and fix the A4 paper strip to the upper chuck. Grip the upper and lower chucks tightly with jigs.
9. Click on a stretch operation interface of the computer, reset the parameter values such as force and displacement, and then click "Start" to pre-stretch the specimen by approximately 5 mm. Reset the parameter values such as force and displacement after the pre-stretching, and then start the tensile test. Export and save the complete data after completion of the test.
10. Measure at least 5 specimen strips for each group. Keep measuring until the repeatability of the bonding force test curves of the 5 specimen strips is relatively high, and then proceed to the test of a next group. Try more tests if the repeatability is not high, and finish the test when the repeatability of the test curves of the 5 specimen strips is relatively high.
11. Draw a bond strength (N/m)-displacement curve after completion of the test, and calculate the bonding force.

### Evaluating the resistance performance of the separator

The test process is as follows:
(1) Prepare a separator: Cut each separator under test into equal sizes of 45.3 mm × 33.7 mm to be used as specimens. Place the specimens in a 60 °C environment and keep baking for at least 4 hours, and then quickly move the specimens into a 25 °C class-100 clean glovebox ready for use.
(2) Prepare a symmetrical battery space-limited aluminum-plastic pocket (the aluminum-plastic pocket is compounded of polypropylene and an aluminum foil, universally applicable to pouch-type cells): The symmetrical battery is a blank symmetrical battery with the positive current collector being a copper foil, and the negative current collector also being a copper foil. The space limiting of this pocket is implemented by holes punched in the middle of the green adhesive tape. The pocket needs to be baked at 60 °C for at least 4 hours before use, and then quickly moved to a 25 °C class-100 clean glovebox mentioned in step (1) above, ready for use.
(3) Assemble the symmetrical battery: In-situ assemble 5 symmetrical batteries as a group of specimens in the glovebox mentioned in step (1) above in the form of negative electrode-separator-negative electrode, where each of the symmetrical batteries contains a different number of separator layers (1, 2, 3, 4, and 5 layers respectively), and each group of specimens includes 5 parallel specimens. Side-seal the pocket by using a simple sealing machine, inject the electrolytic solution with a pipette (300 µL), and seal the bottom.
(4) Fix the assembled symmetrical battery with jigs: Place the assembled symmetrical battery in the glovebox mentioned in step (1) above overnight, so that the electrolytic solution fully infiltrates the separator. Put on a metal jig the next day, where the pressure of the jig is controlled to be 0.7 MPa.
(5) Measure electrochemical impedance spectroscopy (EIS)
   Before measurement, place the symmetrical cells with different numbers of separator layers in a high/low temperature thermostat, and keep the constant temperature at 25 °C for half an hour. Measure the EIS at the specified temperature (25°C) (or, in the case of a low temperature, -25 °C to -0 °C, for example). The duration of keeping the constant temperature may be extended accordingly, for example, may be approximately two hours).
(6) Run a French Bio-Logic VMP3 electrochemical workstation under the following test conditions: voltage: less than 5 V; current: less than 400 mA; and current precision: 0.1 % × 100 µA. Set the EIS measurement conditions to the following values: voltage frequency: 1 MHz to 1 kHz; disturbance voltage: 5 MV; and jig pressure: 0.7 MPa.
(7) Draw a scatter plot of the negative imaginary part of the EIS data by using the real part, and at the same time, draw the data of the parallel specimens that have different numbers of separator layers and the parallel specimens that have the same number of separator layers on one plot, and use the resultant EIS plot as a contrast to the original EIS data.
(8) Eliminate the points outside the first quadrant in the EIS plot obtained in step (7) above, so as to obtain a new EIS plot. Linearly fit the scatter points in the first quadrant in the new EIS plot to obtain a correlation formula. Let y = 0, so as to obtain the x value, that is, the required resistance value of the electrolytic solution in the separator. By analogy, the measured EIS data can be linearly fitted to obtain the resistance values of the parallel specimens that have different numbers of separator layers.

### Evaluating performance of the secondary battery

Testing the cycle performance:
The test process is as follows: Take 5 prepared secondary batteries for each group of specimens, charge and discharge the secondary batteries repeatedly by performing the following steps, and calculate the cycle capacity retention rate of the secondary batteries under 25 °C or 45 °C conditions:
Perform a first charge-and-discharge cycle in a 25 °C environment. Charge the battery at a constant current of 0.7 C (a current at which the nominal capacity of the battery can be fully discharged within 2 hours) until the voltage reaches an upper limit of 4.4 V, and then charge the battery at a constant voltage. Subsequently, discharge the battery at a constant current of 0.5 C until the voltage finally reaches 3 V. Record the first-cycle discharge capacity. Repeat the charge-and-discharge steps for 1000 cycles, and record the discharge capacity at the end of the 1000^{th} cycle. Cycle capacity retention rate = (1000^{th}-cycle discharge capacity/first-cycle discharge capacity) × 100%.

Perform a first charge-and-discharge cycle in a 45 °C environment. Charge the battery at a constant current of 0.7 C (a current at which the nominal capacity of the battery can be fully discharged within 2 hours) until the voltage reaches an upper limit of 4.4 V, and then charge the battery at a constant voltage. Subsequently, discharge the battery at a constant current of 0.5 C until the voltage finally reaches 3 V. Record the first-cycle discharge capacity. Repeat the charge-and-discharge steps for 1000 cycles, and record the discharge capacity at the end of the 1000^{th} cycle. Cycle capacity retention rate = (1000^{th}-cycle discharge capacity/first-cycle discharge capacity) × 100%.

### Embodiments 2 to 3

Identical to Embodiment 1 except the mass ratio between the first organic particle and the pressure-sensitive binder polymer in the pressure-sensitive coating. Specifically,
The mass ratio between the first organic particle and the pressure-sensitive binder polymer in the pressure-sensitive coating of the separator prepared in Embodiment 2 is 90: 10.

The mass ratio between the first organic particle and the pressure-sensitive binder polymer in the pressure-sensitive coating of the separator prepared in Embodiment 3 is 80: 20.

### Embodiments 4 to 9

Identical to Embodiment 1 except the binder polymer or plasticizer in the pressure-sensitive binder polymer. Specifically,
The binder polymer in the pressure-sensitive binder polymer used in Embodiment 4 is: 30% isobutyl acrylate + 25% isooctyl acrylate + 5% 2-hydroxypropyl acrylate + 15% styrene + 22% acrylamide + 3% polyethylene glycol copolymer; and the plasticizer is glycerol.

The binder polymer in the pressure-sensitive binder polymer used in Embodiment 5 is: 30% cyclohexyl acrylate + 25% tetrahydrofuryl methacrylate + 5% 2-hydroxypropyl methacrylate + 15% styrene + 22% acrylonitrile + 3% polyethylene glycol copolymer; and the plasticizer is glycerol.

The binder polymer in the pressure-sensitive binder polymer used in Embodiment 6 is: 30% cyclohexyl acrylate + 25% tetrahydrofuryl methacrylate + 5% vinylstyrene + 15% styrene + 22% acrylonitrile + 3% polyethylene glycol copolymer; and the plasticizer is glycerol.

The binder polymer in the pressure-sensitive binder polymer used in Embodiment 7 is: 30% isobutyl acrylate + 25% isooctyl acrylate + 5% vinylstyrene + 15% styrene + 22% acrylonitrile + 3% polyvinyl alcohol copolymer; and the plasticizer is glycerol.

The binder polymer in the pressure-sensitive binder polymer used in Embodiment 8 is: 30% isobutyl acrylate + 25% isooctyl acrylate + 5% 2-hydroxypropyl methacrylate + 15% styrene + 22% acrylonitrile + 3% polyvinyl alcohol copolymer; and the plasticizer is C₄ to C₁₀ glycerol alkyl diether.

The binder polymer in the pressure-sensitive binder polymer used in Embodiment 9 is: 30% isobutyl acrylate + 25% isooctyl acrylate + 5% 2-hydroxypropyl methacrylate + 15% styrene + 22% acrylonitrile + 3% polyvinyl alcohol copolymer; and the plasticizer is C₄ to C₁₀ propylene glycol alkyl monoether.

### Embodiments 10 to 12

Identical to Embodiment 1 except the graft rate of the plasticizer in the pressure-sensitive binder polymer. Specifically,
The graft rate of the plasticizer in the pressure-sensitive binder polymer used in Embodiment 10 is 5 wt%.

The graft rate of the plasticizer in the pressure-sensitive binder polymer used in Embodiment 11 is 3 wt%.

The graft rate of the plasticizer in the pressure-sensitive binder polymer used in Embodiment 12 is 0 wt%, that is, no plasticizer is grafted.

### Embodiment 13

Preparing a separator
1) Making a separator substrate from a polyethylene microporous film with a thickness of approximately 9 µm, a pore diameter of approximately 50 nm, and a porosity of approximately 38%.
2) Adding a first organic particle and a dispersant (BYK-22136) into water to form a first polymer solution. The first organic particle is poly(vinylidene difluoride-co-hexafluoropropylene. Based on the weight of the vinylidene fluoride (VDF) monomer and the hexafluoropropylene (HFP) monomer, the mass percent of the HFP monomer is approximately 9%. The weight-average molecular weight of the first organic particle is approximately 600×10³ g/mol, the average particle diameter of the first organic particle is approximately 7 µm, and DSC melting point of the first organic particle is approximately 150°C ).
3) Adding the pressure-sensitive binder polymer into the first polymer solution obtained in step 2), and stirring to form a second polymer solution in which the solid content is 12 wt%. The DSC melting point of the pressure-sensitive binder polymer is approximately 10 °C, and the average particle diameter of the pressure-sensitive binder polymer is approximately 1.1 µm. The pressure-sensitive binder polymer includes a binder polymer and a plasticizer mixed at a mass ratio of 5:1, and some deionized water. Approximately 8% by weight of the plasticizer is grafted onto the binder polymer. The binder polymer is a copolymer that is formed by copolymerizing 30 wt% isobutyl acrylate, 25% isooctyl acrylate, 5 wt% 2-hydroxypropyl methacrylate, 15 wt% styrene, 22 wt% acrylonitrile, and 3 wt% polyvinyl alcohol. The plasticizer is glycerol.
4) Adding a second organic particle (30% styrene + 50% butyl acrylate + 20% isooctyl acrylate; average particle diameter: 4 µm; DSC melting point: approximately 55 °C) into the second polymer solution obtained in step 3), so that the mass ratio between the first organic particle and the second organic particle is 65: 20. Stirring to form a third polymer solution with a solid content of 12%, in which the mass ratio between the organic particles (including the first organic particle and the second organic particle mixed at a mass ratio of 65: 20) and the pressure-sensitive binder polymer is 85: 15.
5) Applying an aqueous coating slurry onto one surface of the separator substrate by spin spraying, where the aqueous coating slurry is the third polymer solution with a solid content of 12 wt% obtained in step 4); and drying the slurry to make a separator. The prepared separator includes the separator substrate and a pressure-sensitive coating applied onto one surface of the separator substrate. The pressure-sensitive coating is approximately 3 µm thick, and includes organic particles (including the first organic particle and the second organic particle mixed at a mass ratio of 65: 20) and a pressure-sensitive binder polymer mixed at a mass ratio of 85: 15. The pressure-sensitive binder polymer includes a binder polymer and a plasticizer mixed at a mass ratio of 5: 1. Approximately 8% by weight of the plasticizer is grafted onto the binder polymer. FIG. 6 shows morphology of a pressure-sensitive coating of a separator prepared in this embodiment.

### Embodiments 14 to 15

Identical to Embodiment 13 except the mass ratio between the organic particles and the pressure-sensitive binder polymer in the pressure-sensitive coating. Specifically,

The mass ratio between the organic particles and the pressure-sensitive binder polymer in the pressure-sensitive coating of the separator prepared in Embodiment 14 is 85: 15, in which the mass ratio between the first organic particle and the second organic particle in the organic particles is 75: 10.

The mass ratio between the organic particles and the pressure-sensitive binder polymer in the pressure-sensitive coating of the separator prepared in Embodiment 15 is 90: 10, in which the mass ratio between the first organic particle and the second organic particle in the organic particles is 65: 25.

### Comparative Embodiments 1 to 2

Identical to Embodiment 1 except the mass ratio between the first organic particle and the pressure-sensitive binder polymer in the pressure-sensitive coating. Specifically,
The mass ratio between the first organic particle and the pressure-sensitive binder polymer in the pressure-sensitive coating of the separator prepared in Comparative Embodiment 1 is 91: 9.

The mass ratio between the first organic particle and the pressure-sensitive binder polymer in the pressure-sensitive coating of the separator prepared in Comparative Embodiment 2 is 74: 26.

### Comparative Embodiments 3 to 4

Identical to Embodiment 1 except that the pressure-sensitive binder polymer described in Embodiment 1 is not used. Specifically,
The separator prepared in Comparative Embodiment 3 contains the binder polymer alone but contains no plasticizer, and the mass ratio between the first organic particle and the binder polymer in the pressure-sensitive coating of the prepared separator is 85: 15.

The separator prepared in Comparative Embodiment 4 contains the plasticizer alone but contains no binder polymer, and the mass ratio between the first organic particle and the plasticizer in the pressure-sensitive coating of the prepared separator is 85: 15.

The following evaluates the bonding performance and the resistance of the separators prepared in Embodiments 1 to 15 and Comparative Embodiments 1 to 4 above, and the cycle performance of the secondary batteries prepared from the separators. The test results are shown in Table 1 below.

**Table 1 Performance of separators prepared in Embodiments 1 to 15 and Comparative Embodiments 1 to 4 and cycle performance of secondary batteries prepared from the separators**

| Embodiments | Separator performance | | | | | Secondary battery | |
|---|---|---|---|---|---|---|---|
| | Bonding force of positive electrode (N/m) | | Bonding force of negative electrode (N/m) | | Resistance of separator (Ω) | Capacity retention rate at 25 °C (%) | Capacity retention rate at 45 °C (%) |
| | ≤ 1 MPa | ≥ 2 MPa | ≤ 1 MPa | ≥ 2 MPa | | | |
| Embodiment 1 | 0 | 1.2 | 0 | 0.85 | 0.85 | 90 | 89 |
| Embodiment 2 | 0 | 1 | 0 | 0.8 | 0.87 | 89 | 89 |
| Embodiment 3 | 0 | 1.4 | 0 | 0.92 | 1.04 | 85 | 84 |
| Embodiment 4 | 0 | 1.1 | 0 | 0.83 | 1 | 88 | 88 |
| Embodiment 5 | 0 | 1 | 0 | 0.8 | 0.96 | 89 | 88 |
| Embodiment 6 | 0 | 1.15 | 0 | 0.84 | 0.99 | 88 | 87 |
| Embodiment 7 | 0 | 1.1 | 0 | 0.8 | 0.98 | 87 | 87 |
| Embodiment 8 | 0 | 1.22 | 0 | 0.87 | 0.98 | 87 | 86 |
| Embodiment 9 | 0 | 1.05 | 0 | 0.82 | 0.97 | 87 | 86 |

| Embodiments | Separator performance | | | | | Secondary battery | |
|---|---|---|---|---|---|---|---|
| | Bonding force of positive electrode (N/m) | | Bonding force of negative electrode (N/m) | | Resistance of | Capacity retention | Capacity retention |
| Embodiment 10 | 0 | 1 | 0 | 0.8 | 1 | 83 | 82 |
| Embodiment 11 | 0 | 1.15 | 0 | 0.8 | 1.28 | 75 | 74 |
| Embodiment 12 | 0 | 1.18 | 0 | 0.82 | 1.32 | 72 | 70 |
| Embodiment 13 | 0 | 0.8 | 0 | 0.6 | 1.1 | 83 | 82 |
| Embodiment 14 | 0 | 1.1 | 0 | 0.83 | 0.9 | 88 | 87 |
| Embodiment 15 | 0 | 0.7 | 0 | 0.5 | 1.17 | 82 | 80 |
| Comparative Embodiment 1 | 0 | 0.23 | 0 | 0.1 | 1.4 | 65 | 60 |
| Comparative Embodiment 2 | 0.9 | 2.18 | 0.75 | 1.8 | 2.8 | 38 | 38 |
| Comparative Embodiment 3 | 0 | 0.22 | 0 | 0.1 | 0.98 | 70 | 70 |
| Comparative Embodiment 4 | 1.5 | 3.5 | 1.8 | 2.9 | 7 | 35 | 32 |

As can be seen from the results set out in Table 1 above, the pressure-sensitive binder polymer prepared from the binder polymer and the plasticizer is used for preparing the separator, and organic particles are used together. In this way, the separator is effectively endowed with high bonding performance and high ion conductivity under normal temperature conditions. The resistance of all the prepared separators is below 1.32 Ω under normal temperature conditions. Under a pressure greater than or equal to 2 MPa, the bonding force between each of the separators and the positive electrode is at least 0.70 N/m or even at least 1.00 N/m, and the bonding force between each of the separators and the negative electrode is at least 0.50 N/m. However, under a pressure less than or equal to 1 MPa, the bonding force between each of the separators and the electrode is below 0.1 N/m. Therefore, the prepared separators can avoid the bonding between the layers of a separator during rewinding and storage. In preparing a battery cell from the separator, the electrode plate and the separator can be closely fitted under normal temperature conditions. On the one hand, the scrap of the battery cell, deterioration of the cell performance, and safety hazards are prevented from being caused by dislocation between the electrode plate and the separator. On the other hand, the tunnel furnace and the second lamination step in a conventional battery cell production process can be omitted, thereby saving production space and production time, reducing energy consumption, and significantly increasing the productivity of battery cells. In addition, the shaping performance, safety performance, and kinetic performance of the battery cells can be enhanced. As can be seen from the results of Embodiments 10 to 12, the grafting of the plasticizer into the pressure-sensitive binder polymer reduces the resistance of the separator, and improves the cycle performance of the secondary battery prepared from the separator. Especially, when the graft rate of the plasticizer in the pressure-sensitive binder polymer is at least 5 wt%, the resistance of the separator is lower, and the cycle performance of the secondary battery is higher. As can be seen from the results of Comparative Embodiments 1 to 2, when the amount of the pressure-sensitive binder polymer in use is unduly large or small, the resistance of the separator will increase significantly, and the cycle performance of the secondary battery will deteriorate significantly. As can be seen from the results of Comparative Embodiments 3 to 4, when only one of the binder polymer or the plasticizer is included in the pressure-sensitive binder polymer, the bonding performance of the separator deteriorates, and the cycle performance of the secondary battery deteriorates. When the pressure-sensitive binder polymer contains the plasticizer alone, the resistance of the separator increases significantly, and the cycle performance of the secondary battery deteriorates significantly.

### Embodiments 16 to 20

Identical to Embodiment 1 except the particle diameter of the first organic particle and the thickness of the pressure-sensitive coating.

Specifically, the particle diameter of the first organic particle used in Embodiment 16 is approximately 3 µm, and the thickness of the pressure-sensitive coating is approximately 0.8 µm.

The particle diameter of the first organic particle used in Embodiment 17 is approximately 5 µm, and the thickness of the pressure-sensitive coating is approximately 2 µm.

The particle diameter of the first organic particle used in Embodiment 18 is approximately 20 µm, and the thickness of the pressure-sensitive coating is approximately 15 µm.

The particle diameter of the first organic particle used in Embodiment 19 is approximately 30 µm, and the thickness of the pressure-sensitive coating is approximately 20 µm.

The particle diameter of the first organic particle used in Embodiment 20 is approximately 36 µm, and the thickness of the pressure-sensitive coating is approximately 22 µm.

### Embodiments 21 to 27

Identical to Embodiment 1 except the particle diameter of the pressure-sensitive binder polymer.

Specifically, the particle diameter of the pressure-sensitive binder polymer used in Embodiment 21 is approximately 0.3 µm.

The particle diameter of the pressure-sensitive binder polymer used in Embodiment 22 is approximately 0.5 µm.

The particle diameter of the pressure-sensitive binder polymer used in Embodiment 23 is approximately 0.8 µm.

The particle diameter of the pressure-sensitive binder polymer used in Embodiment 24 is approximately 1.0 µm.

The particle diameter of the pressure-sensitive binder polymer used in Embodiment 25 is approximately 2.0 µm.

The particle diameter of the pressure-sensitive binder polymer used in Embodiment 26 is approximately 3.0 µm.

The particle diameter of the pressure-sensitive binder polymer used in Embodiment 27 is approximately 3.5 µm.

### Embodiments 28 to 32

Identical to Embodiment 1 except the mass ratio between the binder polymer and the plasticizer in the pressure-sensitive binder polymer.

Specifically, the mass ratio between the binder polymer and the plasticizer in the pressure-sensitive binder polymer used in Embodiment 28 is approximately 3: 1.

The mass ratio between the binder polymer and the plasticizer in the pressure-sensitive binder polymer used in Embodiment 29 is approximately 4: 1.

The mass ratio between the binder polymer and the plasticizer in the pressure-sensitive binder polymer used in Embodiment 30 is approximately 11: 1.

The mass ratio between the binder polymer and the plasticizer in the pressure-sensitive binder polymer used in Embodiment 31 is approximately 19: 1.

The mass ratio between the binder polymer and the plasticizer in the pressure-sensitive binder polymer used in Embodiment 32 is approximately 21: 1.

### Embodiments 33 to 38

Identical to Embodiment 14 except the particle diameter of the second organic particle and the thickness of the prepared pressure-sensitive coating.

Specifically, the particle diameter of the second organic particle used in Embodiment 33 is approximately 0.3 µm, and the thickness of the pressure-sensitive coating is approximately 3 µm.

The particle diameter of the second organic particle used in Embodiment 34 is approximately 0.5 µm, and the thickness of the pressure-sensitive coating is approximately 3 µm.

The particle diameter of the second organic particle used in Embodiment 35 is approximately 2 µm, and the thickness of the pressure-sensitive coating is approximately 3 µm.

The particle diameter of the second organic particle used in Embodiment 36 is approximately 8 µm, and the thickness of the pressure-sensitive coating is approximately 4 µm.

The particle diameter of the second organic particle used in Embodiment 37 is approximately 10 µm, and the thickness of the pressure-sensitive coating is approximately 6 µm.

The particle diameter of the second organic particle used in Embodiment 38 is approximately 12 µm, and the thickness of the pressure-sensitive coating is approximately 10 µm.

The following evaluates the bonding performance and the resistance of the separators prepared in Embodiments 16 to 38 above, and the cycle performance of the secondary batteries prepared from the separators. The test results are shown in Table 2 below.

**Table 2 Test results of performance of separators prepared in Embodiments 16 to 38 and cycle performance of secondary batteries prepared from the separators**

| Embodiments | Separator | | | | | Secondary battery | |
|---|---|---|---|---|---|---|---|
| | Bonding force of positive electrode (N/m) | | Bonding force of negative electrode (N/m) | | Resistance of separator (Ω) | Capacity retention rate at 25 °C (%) | Capacity retention rate at 45 °C (%) |
| | ≤ 1 MPa | ≥ 2 MPa | ≤ 1 MPa | ≥ 2 MPa | | | |
| Embodiment 16 | 0 | 0.68 | 0 | 0.45 | 1.12 | 74 | 72 |
| Embodiment 17 | 0 | 0.86 | 0 | 0.72 | 1.02 | 82 | 82 |
| Embodiment 18 | 0 | 1 | 0 | 0.76 | 0.99 | 83 | 84 |
| Embodiment 19 | 0 | 1.07 | 0 | 0.82 | 0.97 | 85 | 84 |
| Embodiment 20 | 0 | 0.71 | 0 | 0.65 | 1.09 | 78 | 77 |
| Embodiment 21 | 0 | 0.7 | 0 | 0.6 | 1.2 | 76 | 75 |
| Embodiment 22 | 0 | 0.89 | 0 | 0.72 | 1 | 82 | 82 |
| Embodiment 23 | 0 | 0.91 | 0 | 0.78 | 1.05 | 84 | 84 |
| Embodiment 24 | 0 | 1.09 | 0 | 0.8 | 0.91 | 88 | 87 |
| Embodiment 25 | 0 | 0.93 | 0 | 0.81 | 0.99 | 86 | 85 |
| Embodiment 26 | 0 | 0.85 | 0 | 0.7 | 1.1 | 83 | 82 |
| Embodiment 27 | 0 | 0.65 | 0 | 0.5 | 1.2 | 73 | 73 |
| Embodiment 28 | 0.23 | 0.65 | 0.17 | 0.42 | 1.3 | 72 | 71 |

| Embodiments | Separator | | | | | Secondary battery | |
|---|---|---|---|---|---|---|---|
| | Bonding force of positive electrode (N/m) | | Bonding force of negative electrode (N/m) | | Resistance of separator (Ω) | Capacity retention rate at | Capacity retention |
| Embodiment 29 | 0 | 0.85 | 0 | 0.75 | 0.92 | 87 | 87 |
| Embodiment 30 | 0 | 1 | 0 | 0.82 | 1.04 | 85 | 84 |
| Embodiment 31 | 0 | 0.95 | 0 | 0.78 | 1.08 | 86 | 85 |
| Embodiment 32 | 0 | 0.56 | 0 | 0.34 | 1.24 | 76 | 76 |
| Embodiment 33 | 0 | 0.87 | 0 | 0.65 | 1.23 | 75 | 73 |
| Embodiment 34 | 0 | 0.92 | 0 | 0.7 | 0.92 | 85 | 84 |
| Embodiment 35 | 0 | 0.96 | 0 | 0.78 | 0.9 | 86 | 86 |
| Embodiment 36 | 0 | 1.05 | 0 | 0.75 | 0.86 | 85 | 85 |
| Embodiment 37 | 0 | 1 | 0 | 0.73 | 0.96 | 84 | 84 |
| Embodiment 38 | 0 | 0.87 | 0 | 0.67 | 1.19 | 79 | 78 |

As can be seen from the results set out in Table 2, in Embodiments 16 to 20, the particle diameter of the first organic particle is changed; in Embodiments 21 to 27, the particle diameter of the pressure-sensitive binder polymer is changed; in Embodiments 28 to 32, the mass ratio between the binder polymer and the plasticizer included in the pressure-sensitive binder polymer is changed; and, in Embodiments 33 to 38, the particle diameter of the second organic particle is changed. In this way, under normal temperature conditions, all the prepared separators exhibit high bonding performance and ion-conductivity, the resistance of all the separators is below 1.3 Ω. The bonding force between each of the separators and the positive electrode is at least 0.56 N/m under a pressure greater than or equal to 2 MPa; and the bonding force between each of the separators and the electrode is below 0.23 N/m under a pressure less than or equal to 1 MPa. The secondary batteries prepared from the separators made in such embodiments also exhibit good cycle performance, and the capacity retention rates of all the batteries under 25 °C and 45 °C conditions are at least 70%. Especially, in the case that: (i) the particle diameter of the first organic particle in use falls within 5 to 30 µm, and/or (ii) the particle diameter of the pressure-sensitive binder polymer falls within 0.5 to 3 µm, and/or (iii) the mass ratio between the binder polymer and the plasticizer included in the pressure-sensitive binder polymer falls within (4 to 19): 1, and/or (iv) the particle diameter of the second organic particle falls within 0.5 to 10 µm, the separators are more effectively endowed with high bonding performance and ion-conductivity under normal temperature conditions, the resistance of all the separators is below 1.1 Ω under normal temperature conditions. The bonding force between each of the separators and the positive electrode is at least 0.80 N/m under a pressure greater than or equal to 2 MPa, and the bonding force between each of the separators and the electrode is below 0.1 N/m under a pressure less than or equal to 1 MPa. The secondary batteries prepared from the separators made also exhibit higher cycle performance, and the capacity retention rates of all the batteries are at least 80 % under 25 °C and 45 °C conditions.

### Embodiments 39 to 47

Identical to Embodiment 1 except that the pressure-sensitive binder polymer in use is a core-shell structured pressure-sensitive binder polymer. Both the core and the shell of the pressure-sensitive binder polymer of the core-shell structured pressure-sensitive binder polymer include a binder polymer and a plasticizer. Table 3 shows the mass ratio between the binder polymer and the plasticizer in the core and shell of the pressure-sensitive binder polymer used in Embodiments 39 to 47.

The following evaluates the bonding performance and the resistance of the separators prepared in Embodiments 39 to 47 above, and the cycle performance of the secondary batteries prepared from the separators. The test results are shown in Table 4 below.

**Table 3 Mass ratio between the binder polymer and the plasticizer in the core and shell of the pressure-sensitive binder polymer used in Embodiments 39 to 47**

| Embodiments | Core | Shell |
|---|---|---|
| | Mass ratio between binder polymer and plasticizer | Mass ratio between binder polymer and plasticizer |
| Embodiment 38 | 3:1 | 8:1 |
| Embodiment 39 | 3.5:1 | 8:1 |
| Embodiment 40 | 4:1 | 8:1 |
| Embodiment 41 | 2:1 | 8:1 |
| Embodiment 42 | 5: 1 | 8:1 |
| Embodiment 43 | 3.5:1 | 6:1 |
| Embodiment 44 | 3.5:1 | 7: 1 |
| Embodiment 45 | 3.5:1 | 9:1 |
| Embodiment 46 | 3.5:1 | 10:1 |

**Table 4 Test results of performance of separators prepared in Embodiments 39 to 47 and cycle performance of secondary batteries prepared from the separators**

| Embodiments | Separator performance | | | | | Secondary battery | |
|---|---|---|---|---|---|---|---|
| | Bonding force of positive electrode (N/m) | | Bonding force of negative electrode (N/m) | | Resistance of separator (Ω) | Capacity retention rate at 25 °C (%) | Capacity retention rate at 45 °C (%) |
| | ≤ 1 MPa | ≥ 2 MPa | ≤ 1 MPa | ≥ 2 MPa | | | |
| Embodiment 39 | 0 | 1.6 | 0 | 1.4 | 0.8 | 92 | 92 |
| Embodiment 40 | 0 | 1.5 | 0 | 1.3 | 0.74 | 94 | 93 |
| Embodiment 41 | 0 | 1.23 | 0 | 1.1 | 0.78 | 93 | 92 |
| Embodiment 42 | 0 | 1.4 | 0 | 1.2 | 0.84 | 90 | 89 |
| Embodiment 43 | 0 | 1.21 | 0 | 0.87 | 0.84 | 90 | 89 |
| Embodiment 44 | 0 | 1.5 | 0 | 1.2 | 0.85 | 90 | 90 |
| Embodiment 45 | 0 | 1.4 | 0 | 1.16 | 0.77 | 93 | 92 |
| Embodiment 46 | 0 | 1.5 | 0 | 1.12 | 0.8 | 91 | 91 |
| Embodiment 47 | 0 | 1.23 | 0 | 0.85 | 0.84 | 90 | 90 |

As can be seen from the results set out in Table 1 above, in the case that a core-shell structured pressure-sensitive binder polymer prepared from the binder polymer and the plasticizer is used for preparing the separator, the separator is more effectively endowed with high bonding performance and high ion conductivity under normal temperature conditions. The resistance of all the prepared separators is lower than 0.9 Ω. Under a pressure greater than or equal to 2 MPa, the bonding force between each of the separators and the positive electrode is at least 1.21 N/m, and the bonding force between each of the separators and the negative electrode is at least 0.85 N/m. However, under a pressure less than or equal to 1 MPa, the bonding force between each of the separators and the electrode is below 0.1 N/m. All the prepared secondary batteries exhibit good cycle performance, and the capacity retention rates of the batteries are higher than 89% under 25 °C and 45°C conditions. Especially, in the case that the mass ratio between the binder polymer and the plasticizer in the core of the core-shell structured pressure-sensitive binder polymer falls within (3 to 4): 1, and in the case that the mass ratio between the binder polymer and the plasticizer in the shell falls within (7 to 9): 1, the separators are more effectively endowed with high bonding performance and ion-conductivity under normal temperature conditions, the resistance of the prepared separators is even lower than 0.8 Ω. Under a pressure greater than or equal to 2 MPa, the bonding force between each of the separators and the positive electrode is at least 1.23 N/m and the bonding force between each of the separators and the negative electrode is at least 1.1 N/m. However, under a pressure less than or equal to 1 MPa, the bonding force between all the separators and the electrode is below 0.1 N/m. The secondary batteries prepared from the separators made also exhibit higher cycle performance, and the capacity retention rates of all the batteries are at least 91% under 25 °C and 45 °C conditions.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A separator, comprising:
a porous separator substrate; and
a pressure-sensitive coating applied onto at least one surface of the separator substrate, wherein the pressure-sensitive coating comprises a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%, wherein
the pressure-sensitive binder polymer comprises a binder polymer and a plasticizer.

2. The separator according to claim 1, wherein a mass ratio between the binder polymer and the plasticizer comprised in the pressure-sensitive binder polymer is (4 to 19): 1, and optionally (4 to 11): 1.

3. The separator according to claim 1 or 2, wherein the pressure-sensitive binder polymer is of a core-shell structure, a core and a shell of the core-shell structure each comprise the binder polymer and the plasticizer, a mass ratio between the binder polymer and the plasticizer in the core is (2 to 5): 1, and optionally (3 to 4): 1, and a mass ratio between the binder polymer and the plasticizer in the shell is (6 to 10): 1, and optionally (7 to 9): 1.

4. The separator according to any one of claims 1 to 3, wherein a part of the plasticizer is grafted onto the binder polymer; and
optionally, based on a weight of the plasticizer, at least 5 wt% of the plasticizer is grafted onto the binder polymer.

5. The separator according to any one of claims 1 to 4, wherein an average particle diameter of the pressure-sensitive binder polymer is 0.5 to 3.0 µm, and optionally 0.8 to 2.0 µm; and optionally, a DSC melting point of the pressure-sensitive binder polymer is -50 °C to 100 °C, and optionally -45 °C to 60 °C.

6. The separator according to any one of claims 1 to 5, wherein the binder polymer comprises a copolymer formed by copolymerizing a reactive monomer mixture, and the reactive monomer mixture comprises at least one of the following first monomers, at least one of the following second monomers, at least one of the following third monomers, and at least one of the following reactive dispersants:
first monomers, comprising: acrylic acid, methacrylic acid, methyl methacrylate, tert-butyl methacrylate, isobornyl methacrylate, methylol acrylamide, acrylamide, styrene, and acrylonitrile;
second monomers, comprising: C₄ to C₂₂ alkyl acrylate, isobutyl acrylate, isooctyl acrylate, tert-butyl acrylate, 2-ethylhexyl (isooctyl) acrylate, cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene ureaethyl methacrylate, dicyclopentene ethoxy methacrylate, tetrahydrofuran methacrylate, trifluoroethyl methacrylate, dimethylaminoethyl methacrylate, diethylaminoethyl methacrylate, ethylene ureaethyl methacrylate, propylene methacrylate, dicyclopentene ethoxy methacrylate, and trifluoroethyl methacrylate;
third monomers, comprising: 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloyloxypropyltrimethoxysilane, N-methylol acrylamide, N-butoxymethyl(meth)acrylamide, diacetone acrylamide (DAAM), ethyl acetoacetate methacrylate (AAEM), vinylstyrene, epoxy resin (with an epoxy value of 0.35 to 0.50), and divinylbenzene; and
reactive dispersants, comprising: polyvinyl alcohol, polypropylene alcohol, polypropylene glycol, polyethylene glycol, and polyethylene acid alcohol.

7. The separator according to any one of claims 1 to 6, wherein the plasticizer is one or more selected from: C₄ to C₁₀ glycerol alkyl diether or monoether; C₄ to C₁₀ glycerol carboxylic acid monoester or diester; C₄ to C₁₀ propylene glycol alkyl monoether; and glycerol.

8. The separator according to any one of claims 1 to 7, wherein an average thickness of the pressure-sensitive coating is 2 to 20 µm, and optionally 2 to 15 µm.

9. The separator according to any one of claims 1 to 8, wherein an average particle diameter of the first organic particle is 5 to 30 µm, and optionally 5 to 20 µm;
optionally, a DSC melting point of the first organic particle is -50 °C to 200 °C, and optionally -40 °C to 160 °C;
optionally, a weight-average molecular weight of the first organic particle is 300×10³ g/mol to 800×10³ g/mol, and optionally 400×10³ g/mol to 650×10³ g/mol;
optionally, the first organic particle is one or more polymers, and each of the polymers comprises one or more groups selected from halogen, phenyl, epoxy, cyano, ester, and amido;
optionally, the first organic particle is at least one selected from: a homopolymer or copolymer of fluorine-containing alkenyl monomer units; a homopolymer or copolymer of olefin monomer units; a homopolymer or copolymer of unsaturated nitrile monomer units; a homopolymer or copolymer of alkylene oxide monomer units; a dimer, homopolymer, or copolymer of monosaccharide monomer units; and a modified compound of any one of the foregoing homopolymers or copolymers;
further optionally, the first organic particle is at least one selected from: polyperfluoroethylene, polyvinylidene difluoride, poly(vinylidene difluoride-co-hexafluoropropylene), poly(vinylidene difluoride-co-trichloroethylene), poly(styrene-co-methyl methacrylate), poly(styrene-co-butyl acrylate), polymethyl methacrylate, polyacrylonitrile, polyvinyl acetate, poly(ethylene-co-vinyl acetate), polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose; and
further optionally, the first organic particle is at least one selected from: poly(vinylidene difluoride-co-hexafluoropropylene), poly(styrene-co-butyl acrylate), polyperfluoroethylene, polyvinylidene difluoride, and poly(vinylidene difluoride-co-trichloroethylene).

10. The separator according to any one of claims 1 to 9, wherein a mass ratio between the first organic particle and the second organic particle is (1 to 4): 1, and optionally (1.5 to 2.5): 1.

11. The separator according to any one of claims 1 to 10, wherein an average particle diameter of the second organic particle is 0.5 to 10 µm, and optionally 2 to 8 µm;
optionally, a DSC melting point of the second organic particle is -30 °C to 100 °C, and optionally -30 °C to 70 °C;
optionally, a weight-average molecular weight of the second organic particle is 10×10³ g/mol to 100×10³ g/mol, and optionally 20×10³ g/mol to 80×10³ g/mol;
optionally, the second organic particle is one or more polymers, and each of the polymers comprises one or more groups selected from phenyl, epoxy, cyano, ester, hydroxyl, carboxyl, sulfonyl ester, and pyrrolidone;
optionally, the second organic particle is at least one selected from: a homopolymer or copolymer of acrylate monomer units; a homopolymer or copolymer of acrylic acid monomer units; a homopolymer or copolymer of unsaturated nitrile monomer units; a homopolymer or copolymer of alkenyl monomer units; a homopolymer or copolymer of styrene monomer units; a homopolymer or copolymer of epoxy monomer units; a polyurethane compound; a rubber compound; a dimer, homopolymer, or copolymer of monosaccharide monomer units; and a modified compound of any one of the foregoing homopolymers or copolymers; and
further optionally, the second organic particle is at least one selected from: polymethyl methacrylate, polyacrylonitrile, polyvinylpyrrolidone, polyvinyl acetate, poly(ethylene-co-vinyl acetate), poly(styrene-co-methyl methacrylate), poly(styrene-co-butyl acrylate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, poly(acrylonitrile-co-styrene-co-butadiene), poly(styrene-co-butyl acrylate-co-isooctyl acrylate), and polyimide.

12. The separator according to any one of claims 1 to 11, wherein a porosity of the separator substrate is 10% to 95%, a pore diameter of the separator substrate is 20 to 60 nm, and a thickness of the separator substrate is 3 to 12 µm, and optionally 5 to 9 µm; and
optionally, the separator substrate comprises one or more films or nonwovens selected from: polyethylene, polypropylene, polyethylene terephthalate, polybutylene terephthalate, polyester, polyacetal, polyamide, polycarbonate, polyimide, polyether ether ketone, polyaryl ether ketone, polyetherimide, polyamideimide, polybenzimidazole, polyethersulfone, polyphenylene ether, a cycloolefin copolymer, polyphenylene sulfide, and polyethylene naphthalene.

13. A method for preparing the separator according to any one of claims 1 to 12, wherein the method comprises the following steps:
S1) adding a first organic particle and a dispersant into a solvent to form a first polymer solution;
S2) adding a pressure-sensitive binder polymer into the first polymer solution obtained in step S1), and mixing to form a second polymer solution;
S3) optionally, adding a second organic particle into the second polymer solution obtained in step S2), and mixing to form a third polymer solution; and
S4) coating at least one surface of a porous separator substrate with the second polymer solution obtained in step S2) or the third polymer solution obtained in step S3), and drying to obtain a separator, wherein
the separator comprises a pressure-sensitive coating formed on at least one surface of the separator substrate; the pressure-sensitive coating comprises a first organic particle at a mass percent of 40 wt% to 90 wt%, a pressure-sensitive binder polymer at a mass percent of 10 wt% to 20 wt%, and optionally a second organic particle at a mass percent of 0 wt% to 50 wt%; and the pressure-sensitive binder polymer comprises a binder polymer and a plasticizer.

14. A secondary battery, comprising a positive electrode plate, a negative electrode plate, a separator located between the positive electrode plate and the negative electrode plate, and an electrolytic solution, wherein the separator is the separator according to any one of claims 1 to 12 or a separator prepared by the preparation method according to claim 13.

15. An electrical device, comprising the secondary battery according to claim 14.
